# EUROPEAN PATENT APPLICATION

(11) **EP 2 854 042 A1**
(43) Date of publication of application: **01.04.2015**
(21) Application number: 14181586.0
(22) Date of filing: 20.08.2014
(51) Int. Cl.: G06F 13/40

(54) **Information processing apparatus, data transfer apparatus, and data transfer method**

(30) Priority: 27.09.2013 JP 2013202144
(71) Applicant: FUJITSU LIMITED, Kawasaki-shi, Kanagawa 211-8588 (JP)
(72) Inventor: Nishiyashiki, Masaru, Kanagawa, 211-8588 (JP)
(74) Representative: Hoffmann Eitle

(57) **Abstract**

A data transfer apparatus includes a reception unit that receives and stores data from a first apparatus therein, and a transmission unit that stores data transferred from the reception unit and transmits the data to a second apparatus. The transmission unit includes an information holding unit (800) that holds data information relating to the data transferred thereto for each transfer path, a common holding unit (850) commonly used by the plurality of transfer paths, and a first controller that performs, based on an inputting situation of the data information for each transfer path, control for inputting the data information to the information holding unit after passing the common holding unit. The reception unit includes a suppression unit that suppresses new data transfer to the transmission unit in response to an information amount of the information held in the common holding unit.

## Description

### FIELD

The present issue relates to an information processing apparatus, a data transfer apparatus, and a data transfer method.

### BACKGROUND

In an information processing system (information processing apparatus) such as a server, a data transfer apparatus such as a crossbar including a buffer apparatus is sometimes used in order to couple a plurality of system boards and Input/Output (I/O) boards and so forth to each other.

The buffer apparatus can be configured from a First-In First-Out (FIFO) for which an external memory such as a Random Access Memory (RAM) is used. For example, a configuration of a buffer apparatus is known which includes an overflow region provided in an external memory in order to perform data saving when a readout side buffer comes to have no free capacity therein (for example, refer to

### Patent Literature 1).

[Patent Literature 1] International Publication Pamphlet No. WO 2010/122613

In an information processing system, a plurality of Virtual Channels (VCs; transferpaths) individually having buffers independent of each other are sometimes set on a transfer path from a transmission source to a transmission destination of a packet (data). The transmission source can transmit data through one of a plurality of VCs set between the transmission source and the transmission destination. Consequently, even if data is stagnated by congestion or the like in some of the VCs to the transmission destination, the transmission source can transfer data without being influenced by the stagnation by selecting a different VC to the transmission destination.

Where a plurality of VCs are set on a transmission path between a transmission source and a transmission destination, the buffer apparatus includes buffers independent of each other for each of the VCs. At this time, since control of the buffer is performed for each of the VCs by the buffer apparatus, the amount of circuitry increases. Further, where the buffer apparatus is configured from a FIFO for which a memory such as a RAM is used, since the RAM and a peripheral circuit are provided for each of the VCs, the amount of circuitry further increases.

### SUMMARY

According to one aspect, it is an object of the present invention to implement, with a simple configuration, an informationprocessing apparatus including a data transfer apparatus that outputs inputted data through one of a plurality of transfer paths set between a transmission source and a transmission destination of data.

It is to be noted that, in addition to the object described above, also it can be recognized as one of other objects of the present invention to achieve such effects as are derived from components a mode for carrying out the invention hereinafter described but are not achieved by the prior art.

According to an aspect of the embodiment and modification, an information processing apparatus includes a first apparatus that transmits data, a data transfer apparatus that outputs the data inputted from the first apparatus through one of a plurality of transfer paths set between the first apparatus and a transfer destination of the data, and a second apparatus that serves as the transfer destination and receives the data from the data transfer apparatus, wherein the data transfer apparatus includes a reception unit that receives and stores the data from the first apparatus therein, and a transmission unit that stores the data transferred from the reception unit and transmits the data to the second apparatus, the transmission unit includes an information holding unit that holds data information relating to the data transferred from the reception unit therein for each transfer path, a common holding unit commonly used by the plurality of transfer paths, and a first controller that performs, based on an inputting situation of the data information for each transfer path, control for inputting the data information to be inputted to the information holding unit to the information holding unit after passing the common holding unit, and the reception unit includes a suppression unit that suppresses new data transfer to the transmission unit in response to an information amount of the information held in the common holding unit.

With the embodiment and modification, an information processing apparatus including a data transfer apparatus that outputs inputted data through one of a plurality of transfer paths set between a transmission source and a transmission destination of data can be implemented with a simple configuration.

### BRIEF DESCRIPTION OF DRAWINGS

FIG. 1 is a view depicting an example of a configuration of an information processing system;
FIG. 2 is a view depicting an example of a configuration of a reception buffer of the information processing system depicted in FIG. 1;
FIG. 3 is a view depicting an example of a configuration of a transmission buffer of the information processing system depicted in FIG. 1;
FIG. 4 is a view depicting an example of a configuration of a queue depicted in FIGS. 2 and 3;
FIG. 5 is a view depicting an example of a configuration wherein a 1RW-RAM is shared by four VCs;
FIG. 6 is a timing chart depicting an example of a case in which read/write competition occurs in a packet management unit depicted in FIG. 5;
FIG. 7 is a view depicting a state of an input queue between timings t12 and t20 in the timing chart depicted in FIG. 6;
FIG. 8 is a view depicting an example of a configuration of a crossbar according to an embodiment;
FIG. 9 is a view depicting an example of a configuration of a transmission packet management unit depicted in FIG. 8;
FIG. 10 is a view depicting an example of a configuration of a peripheral circuit of a pre-queue depicted in FIG. 9;
FIG. 11 is a view depicting an example of a conf iguration of a pre-queue state prediction circuit depicted in FIG. 8;
FIG. 12 is a view depicting a state of an input queue and a pre-queue between timings t12 and t30 where four stage pre-queues are applied in the timing chart depicted in FIG. 6;
FIG. 13 is a timing chart illustrating an example of operation of the crossbar depicted in FIG. 8;
FIG. 14 is a view depicting a state of an input queue and a pre-queue between timings t8 and t24 in the timing chart depicted in FIG. 13;
FIG. 15 is a flow chart illustrating an example of operation of the pre-queue state prediction circuit depicted in FIG. 8;
FIG. 16 is a flow chart illustrating an example of operation of a packet information inputting process by the transmission packet management unit depicted in FIG. 8;
FIG. 17 is a flow chart illustrating an example of operation of an outputting process from a pre-queue by the transmission packet management unit depicted in FIG. 8; and
FIG. 18 is a view depicting a configuration of a reception buffer according to a modification to the embodiment.

### DESCRIPTION OF EMBODIMENTS

In the following, embodiments are described with reference to the drawings.

### [1] First Embodiment

### [1-1] Information Processing System

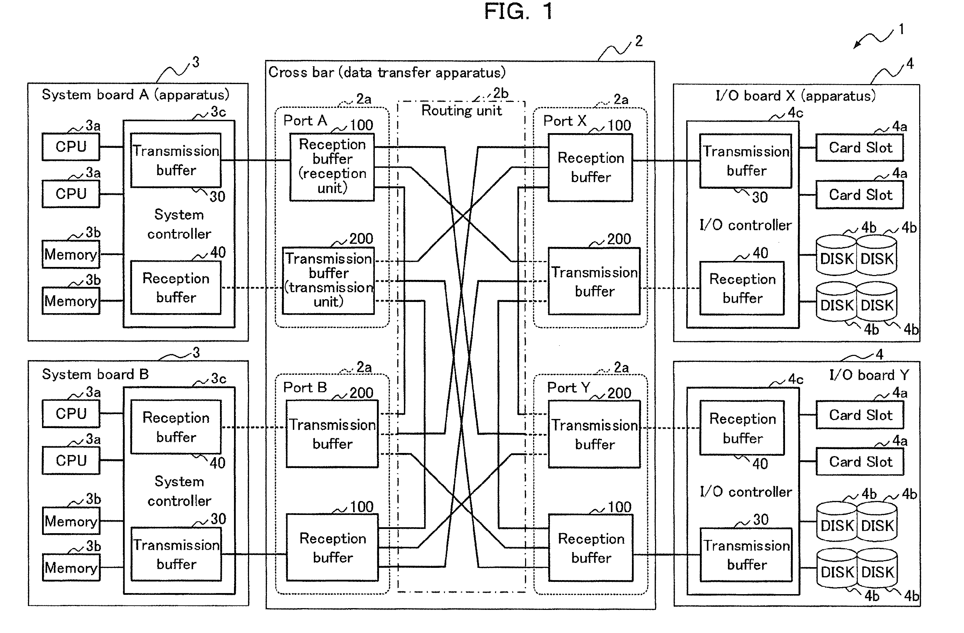

FIG. 1 is a view depicting an example of a configuration of an information processing system 1.

As depicted inFIG. 1, the informationprocessing system 1 includes a crossbar 2 (crossbar board), and a plurality of (for example, two) system boards 3 and a plurality of (for example, two) I/O boards 4 connected to each other through the crossbar 2.

The crossbar (data transfer apparatus) 2 includes a plurality of (for example, four) ports (port specific portions) 2a coupled one by one to the system boards 3 and I/O boards 4 and a routing unit 2b that completely couples the ports 2a to each other.

It is to be noted that the plurality of ports 2a have configurations similar to each other. Further, the plurality of system boards 3 have configurations similar to each other, and the plurality of I/O boards 4 have configurations similar to each other. In the following description, a reference characterAorB is used to describe a specific one of the system boards 3 and a reference character X or Y is used to describe a specific one of the I/O boards 4 as depicted in FIG. 1. Further, where a specific one of the ports 2a is described, a reference character A, B, X or Y is used for the port 2a opposing to the system board A or B or the I/O board X or Y, respectively.

The ports 2a individually include, as an example of a buffer apparatus, a reception buffer 100 that stores a packet (data) received from a system board 3 therein and a transmission buffer 200 that stores a packet transferred from a different port 2a through the routing unit 2b therein and transmits the received packet to a destination port. A conf iguration of the reception buffer 100 and the transmission buffer 200 is hereinafter described.

The routing unit 2b couples the plurality of reception buffers 100 and the plurality of transmission buffers 200 to each other by other to the other (sic: correctly, by plural to plural) and is configured for transfer of a packet inputted from any reception buffer 100 to the routing unit 2b to any of the destination transmission buffers 200 in the crossbar 2. The routing units 2b may be formed, for example, from a static network directly connecting the ports 2a to each other or a dynamic network such as a crossbar switch.

Packet transmission between the system boards 3 and I/O boards 4 and the crossbar 2 is performed using a plurality of VCs that share a transmission path (wiring line, path). The VCs have buffers independent of each other and have no dependency relationship therebetween. For example, even if a packet passing a certain VC is stagnated, another packet passing a different VC is not stagnated (is not influenced by the stagnated VC).

Each system board 3 includes a Central Processing Unit (CPU) 3a, a memory 3b, and a system controller 3c.

The CPU 3a is a processing apparatus (processor) that is coupled to the memory 3b and the system controller 3c and performs various kinds of control and calculation. The CPU 3a executes a program stored in the memory 3b or a Read Only Memory (ROM) or the like not depicted to implement various functions of the system board 3.

For example, when a packet is to be transmitted, the CPU 3a can select a VC in which no competition occurs (packets are not congested) from among the VCs set to a transfer path to a transmission destination and transfer the packet with identification information of the selected VC and so forth added thereto. It is to be noted that the CPU 3a can detect a state of resources of the VCs such as a congestion situation of the buffers in the crossbar 2 and so forth, and can select a VC to be used for transfer of the packet on the basis of a result of the detection. The selection of a transmission destination VC of a packet by the CPU 3a is not limited to the technique described above but can be performed by various known techniques.

The memory 3b is a storage device that stores various kinds of data and programs therein. When a program is to be executed, the CPU 3a stores and develops data and the program into the memory 3b. It is to be noted that, as the memory 3b, a volatile memory such as, for example, a RAM is available.

The system controller 3c performs various kinds of control of the system board 3 , and, in the example depicted in FIG. 1, the system controller 3c performs interface control with the crossbar 2. The system controller 3c includes a transmission buffer 30 and a reception buffer 40. The transmission buffer 30 temporarily stores a packet (including identification information of a VC) issued from the CPU 3a to a different system board 3 or I/O board 4, and transmits the packet to the crossbar 2. The reception buffer 40 temporarily stores a packet received from the crossbar 2 and destined for the own system board 3 therein and passes the packet to the CPU 3a or the memory 3b.

Each I/O board 4 includes card slots 4a, disks 4b and an I/O controller 4c.

The card slots 4a are slots to which various I/O devices and interface cards for a network and so forth are to be connected. The disks 4b are hardware that stores various kinds of data, programs and so forth therein. As the disks 4b, various devices such as, for example, magnetic disk devices such as a Hard Disk Drive (HDD), semiconductor drive devices such as a Solid State Drive (SSD), nonvolatile memories such as a flash memory and so forth are available. An interface card or a disk 4b coupled to a card slot 4a may transmit a packet with identification information of a VC and so forth added thereto similarly to the CPU 3a.

The I/O controller 4c is a controller that performs interface control with the crossbar 2 and includes a transmission buffer 30 and a reception buffer 40 similarly to the system controller 3c. The reception buffer 40 temporarily stores a packet received from the crossbar 2 and transmits the packet to an apparatus or a network coupled to the card slot 4a or to the disk 4b. The transmission buffer 40 temporarily stores a packet outputted from the card slot 4a or the disk 4b and transmits the packet to the crossbar 2 in response to a request from the system board 3 or the like.

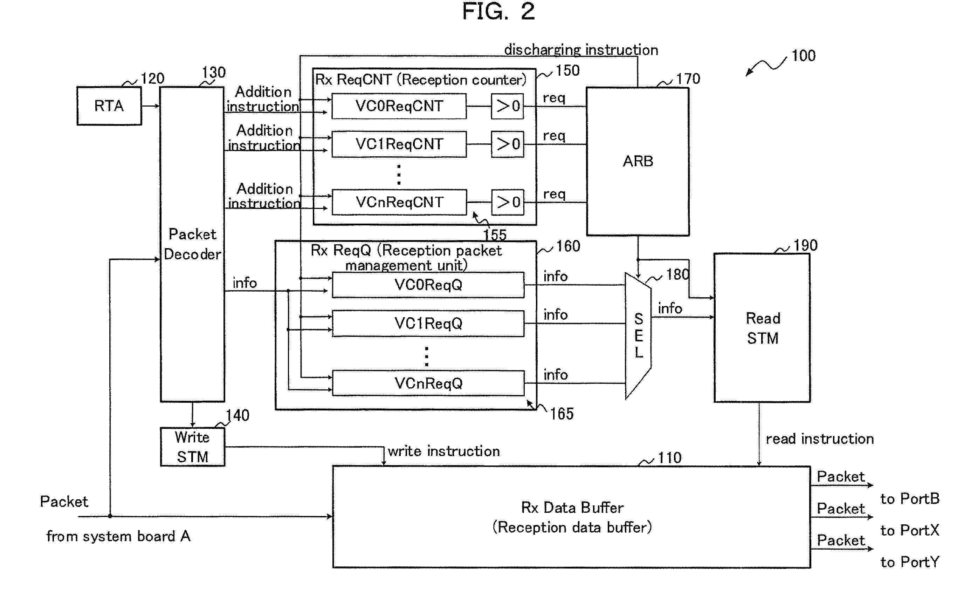

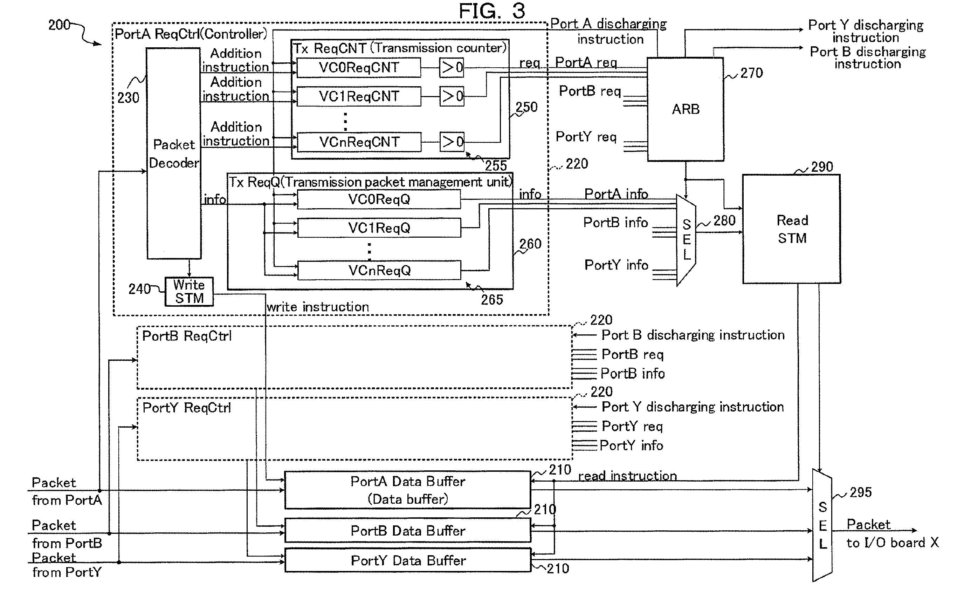

Now, the reception buffers 100 and the transmission buffers 200 of the crossbar 2 are described with reference to FIGS. 2 and 3.

FIG. 2 is a view depicting an example of a configuration of each reception buffer 100 of the information processing system 1 depicted in FIG. 1, and FIG. 3 is a view depicting an example of a configuration of each transmission buffer 200. It is to be noted that FIG. 2 depicts an example of the reception buffer 100 provided in the port A and FIG. 3 depicts an example of the transmissionbuffer 200 provided in the port X.

First, the reception buffer 100 is described.

As depicted in FIG. 2, the receptionbuffer 100 includes a reception data buffer 110, an RTA (Routing Table Array) 120, a packet decoder (Packet Decoder) 130, a write STM (State Machine) 140 and a reception counter 150. The reception buffer 100 further includes a reception packet management unit 160, an arbiter 170, a selector 180 and a read STM 190.

The reception buffer 100 passes a packet received from the system board A to the reception data buffer 110 and the packet decoder 130.

It is to be noted that the packet received by the reception buffer 100 has added thereto a packet header including destination information, identification information of a VC and information of a packet length and so forth added by the transmission source. Here, the destination information may be unique identification information added to the packet by the transmission source of the packet such as, for example, an identification number of the transmission destination of the packet.

The reception data buffer (Rx Data Buffer) 110 stores, for each VC, a packet main body from a transmission source (system board 3 or I/O board 4; in the example depicted in FIG. 2, system board A) of a packet. As the reception data buffer 110, a volatile memory such as, for example, a RAM is available.

The RTA 120 is a table that associates destination information in a received packet and a destination port with each other. It is to be noted that, as the destination port, identification information such as a transfer destination port unique unit number for identifying the port 2a of the transfer destination of the packet is available.

The packet decoder 130 extracts and analyzes packet information from a packet. In particular, the packet decoder 130 confirms a packet length on the basis of information in a packet and confirms (analyzes) a destination port on the basis of destination information in the packet and information of the RTA 120. Then, the packet decoder 130 produces packet information including the packet length and the information of the destination port and transmits the produced information to the reception packet management unit 160.

Further, the packet decoder 130 decides a VC of a packet inputted thereto on the basis of information in the packet and writes the packet into the reception data buffer 110 of the decided VC using the write STM 140. Further, the packet decoder 130 transmits a counting instruction (for example, an addition instruction) of the pertaining VC to the reception counter 150.

The write STM 140 controls writing of a reception packet into the reception data buffer 110 in response to an instruction from the packet decoder 130.

The reception counter (Rx ReqCNT) 150 includes a plurality of (for example, n+1; n is an integer of one ormore) counters (VC[0-n]ReqCNT) 155 and counts the number of packets stored in the reception data buffer 110 for each VC. Each of the counters 155 is incremented by one every time one packet is received but is decremented by one every time one packet is transferred. For example, the reception counter 150 increments the value of the counter 155 of the corresponding VC by one in response to an addition instruction from the packet decoder 130 but decrements the counter 155 of the corresponding VC by one in response to a subtraction instruction from the arbiter 170.

It is to be noted that the value of n can be associated with the number of all VCs set to transfer paths between the system board A, system board B and I/O boards X and Y.

The reception packet management unit (Rx ReqQ) 160 includes a plurality of (for example, n+1) queues (VC[0-n]ReqQ) 165 and stores and manages packet information (destination port, packet length and so forth) into a queue 165 for each VC. If an instruction of a queue 165 is received from the arbiter 170, then the reception packet management unit 160 opens a corresponding queue 165 and outputs one piece of packet information.

The arbiter (ARB) 170 is an arbitration unit that arbitrates a packet outputting request between VCs. The arbiter 170 refers to the values (outputs of ">"; represented as "req" in FIG. 2) of the counters 155 of the reception counter 150 to determine a packet of which VC is to be outputted from among waiting packets. Further, the arbiter 170 issues an instruction for selection of the packet information of the determined VC to the selector 180 and issues an instruction to read out the reception packet from the reception data buffer 110 to the read STM 190. Then, the arbiter 170 causes the reception counter 150 to decrement the value of the counter 155 for the selected VC by one and issues an instruction to open the queue 165 retaining the selected packet information to the reception packet management unit 160.

The selector (SEL) 180 selects the queue 165 instructed by the arbiter 170 from among the queues 165 of the reception packet management unit 160 and reads out the top piece of the packet information (represented as "info" in FIG. 2) stored in the selected queue 165 and then passes the read out packet information to the read STM 190.

The read STM 190 controls reading out of a reception packet from the reception data buffer 110 in response to an instruction from the arbiter 170. If a reading out instruction is received from the arbiter 170, then the read STM 190 reads out the reception packet of the VC corresponding to the packet information read out by the selector 180 and transfers the reception packet to a corresponding destination port.

Now, the transmission buffer 200 is described.

As depicted in FIG. 3, the transmission buffer 200 includes a data buffer 210 and a controller 220 for each of input ports connected thereto. In the example depicted in FIG. 3, the data buffer 210 and the controller 220 are provided corresponding to each of the input ports A, B and Y. It is to be noted that, in FIG. 3, corresponding to the input ports A, B and Y, the data buffer 210 is represented as "Port[A, B, Y] DataBuffer" and the port controller 220 is represented as "Port[A, B, Y] ReqCtrl".

Further, as depicted in FIG. 3, the transmission buffer 200 includes an arbiter 270, a selector 280, a read STM 290 and a selector 295 commonly used by a plurality of sets (among the input ports) of the data buffer 210 and the controller 220.

The controller 220 is provided for each of the input ports (transmission sources of packets), and each of the controlling units 220 includes a packet decoder 230, a write STM 240, a transmission counter 250 and a transmission packet management unit 260. It is to be noted that, in FIG. 3, for simplification of the figure, illustration of the inside of the controller 220 corresponding to the ports B and Y is omitted.

The data buffer 210, packet decoder 230, write STM 240, transmission counter 250, and transmission packet management unit 260 have functions similar to those of the corresponding components of the reception packet 100 depicted in FIG. 2.

In particular, each of the data buffers 210 stores a packet main body from a corresponding system board 3 or I/O board 4 (system board A or B or I/O board Y in the example depicted in FIG. 3) for each VC.

The packet decoder 230 is a decoder that extracts and analyzes packet information from a packet similarly to the packet decoder 130. The packet decoder 230 decides a VC of an inputted packet and writes the packet into the data buffer 210 of the decided VC using the write STM 240. Further, the packet decoder 230 transmits a counting instruction of the pertaining VC to the transmission counter 250. Further, the packet decoder 230 confirms (analyzes) packet information such as a packet length on the basis of the information in the packet and transmits the packet information to the transmission packet management unit 260.

It is to be noted that, since all of packets inputted to the transmission buffer 200 are transmitted to the corresponding destination (in the example depicted in FIG. 3, I/O board X), the transmission buffer 200 can omit the RTA 120 and the packet decoder 230 can omit confirmation of the destination port.

The write STM 240 controls writing of a reception packet into the corresponding data buffer 210 in response to an instruction from the corresponding packet decoder 230.

The transmission counter (Tx ReqCNT) 250 includes a plurality of (for example, n+1) counters (VC[0-n]ReqCNT) 255 and counts the number of packets stored in the transmission buffer 200 for each VC similarly to the reception counter 150.

The transmission packet management unit (Tx ReqQ) 260 includes a plurality of (for example, n+1) queues (VC[0-n] ReqQ) 265 and stores packet information into the queue 265 for each VC and manages the packet information similarly to the reception packet management unit 160.

While the arbiter (ARB) 270 is an arbitration unit having a function similar to that of the arbiter 170, different from the arbiter 170, the arbiter 270 preforms not only arbitration between VCs but also arbitration between input ports. The arbiter 270 refers to the value (indicated as "Port[A, B, Y] req" in FIG. 3) of each counter 255 of the transmission counter 250 to determine a packet of which VC of which input port is to be outputted from among waiting packets. Further, the arbiter 270 issues an instruction to select the packet information of the determined VC to the selector 280 and issues an instruction to read out the reception packet from the data buffer 210 to the read STM 290. Then, the arbiter 270 causes the transmission counter 250 to decrement the value of the counter 255 of the selected VC by one and issues an instruction to open the queue 265 that retains the selected packet information to the transmission packet management unit 260.

While the selector (SEL) 280 has a function similar to that of the selector 180, different from the selector 180, the selector 280 selects the queue 265 from among the plurality of VCs of the plurality of input ports. The selector 280 selects the queue 265 designated by the arbiter 270 from among the queues 265 of the transmission packet management unit 260, and reads out the top piece of the packet information (indicated as "Port[A, B, Y] info" in FIG. 3) stored in the selected queue 265 and passes the read out packet information to the read STM 290.

While the read STM 290 has a function similar to that of the read STM 190, different from the read STM 190, the read STM 290 controls reading out of a packet from the data buffer 210 of the plurality of input ports. If a reading out instruction is received from the arbiter 270, then the read STM 290 causes the selector 295 to select the data buffer 210 of the designated input port and reads out the reception packet of the input port and the VC corresponding to the packet information read out by the selector 280.

The selector (SEL) 295 selects the data buffer 210 designated by the read STM 290 and transfers the top packet stored in the selected data buffer 210 to the transmission destination (in the example depicted in FIG. 3, I/O board X).

It is to be noted that, in the information processing system 1, where packet information (packet length and so forth) is transmitted from a reception buffer 100 through the routing unit 2b in addition to a packet, the packet decoder 230 of the transmission buffer 200 may be omitted.

Incidentally, the queues 165 and 265 (VC[0-n]ReqQ) in the inside of the reception packet management units 160 and transmission packet management units 260 that manage packet information may each be configured from a FIFO. The reception packet management units 160 and the transmission packet management units 260 each configured from a FIFO are hereinafter referred to collectively as packet management units 360, and the queues 165 and 265 are hereinafter referred to collectively as queues 365.

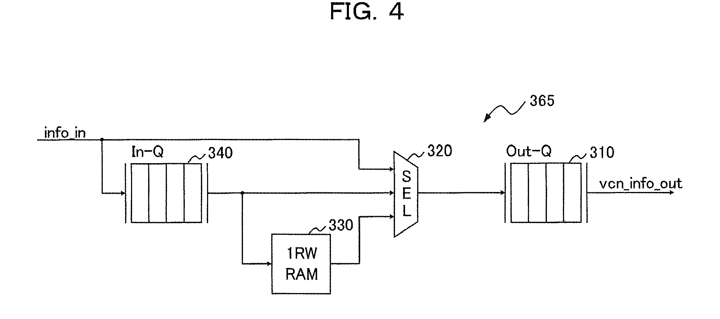

FIG. 4 is a view depicting an example of a configuration of a queue 365 (165 and 265) depicted in FIGS. 2 and 3.

As depicted in FIG. 4, each queue 365 in the packet management unit 360 includes an output queue 310, a selector 320, a 1 Read-Write-RAM (1RW-RAM) 330 and an input queue 340. As the output queue (Out-Q) 310 and the input queue (In-Q) 340, a circuit that can perform high-speed read/write operation such as a resister is available.

The 1RW-RAM 330 uses, using a set of an address and data for accessing to the RAM, the address and the data commonly in the read operation and the write operation, and the read operation and the write operation are changed over alternately after every given cycle. As the 1RW-RAM 330, for example, a Static RAM (SRAM) is available.

The selector (SEL) 320 selects one of packet information (indicated as "info_in" in FIG. 4) inputted from the packet decoder 130 or 230, packet information in the input queue 340 and packet information in the 1RW-RAM 330 and outputs the selected packet information to the output queue 310.

The queue 365 controls the selector 320 in response to an availability of the output queue. For example, if the queue 365 has a small number of waiting packets (has some free space), then the queue 365 controls the selector 320 to use only the output queue 310, and stores packet information inputted from the packet decoder 130 or 230 into the output queue 310. On the other hand, if the output queue 310 overflows (has no free space), then the queue 365 writes the inputted packet information into the 1RW-RAM 330 through the input queue 340. Then, the queue 365 waits that the output queue 310 becomes available, and controls the selector 320 to read out packet information from the 1RW-RAM 330 and then stores the read out packet information into the output queue 310.

It is to be noted that an output (represented as "vcn_info_out" in FIG. 4) from the output queue 310 is used as packet information to be selected and extracted by the selector 180 or 280.

While the 1RW-RAM 330 has a high degree of integration, the 1RW-RAM 330 is difficult to perform read/write at the same time, and read/write competition sometimes occurs. The read/write competition signifies a state that the input queue 340 is placed into a writable state at a timing of a read operation by the 1RW-RAM 330. In this case, the queue 365 is difficult to write target data of the write operation into the 1RW-RAM 330 till a later timing of the write operation into the 1RW-RAM 330 occurs.

Therefore, the queue 365 accumulates pieces of packet information to be written into the 1RW-RAM 330 to some degree in the input queue 340, and writes a plurality of pieces of packet information into the 1RW-RAM 330 at the same time (collectively) and reads out the plurality of pieces of packet information from the 1RW-RAM 330 simultaneously (collectively). By performing such operation as just described, the queue 365 solves the read/write competition arising from use of the 1RW-RAM 330.

It is to be noted that, while the FIFO may be configured from Flip Flops (FF), as the number of packets to be handled by the queue 365 increases, the area efficiency decreases in comparison with that of the configuration depicted in FIG. 4, and also the power consumption increases. Accordingly, where the FIFO is configured from a combination of the output queue 310 and input queue 340 and the 1RW-RAM 330 as depicted in FIG. 4, the area coefficient increases and the power consumption can be suppressed in comparison with those where the FIFO is configured from FFs.

Here, while it is the most simple configuration that the 1RW-RAM 330 is provided simply for each VC as depicted in FIG. 4, if the 1RW-RAM 330 is shared by the plurality of queues 365, then the area efficiency of the packet management unit 360 further increases and the power consumption can be suppressed.

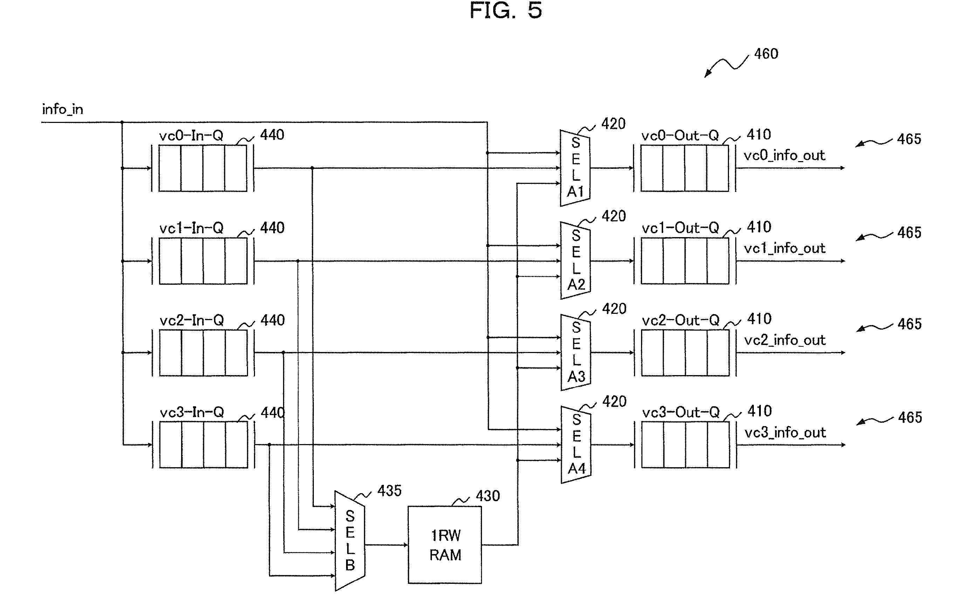

FIG. 5 is a view depicting an example of a configuration wherein a 1RW-RAM 330 is shared by four VCs.

As an example, the packet management unit 460 depicted in FIG. 5 includes a plurality of (for example, four) queues 465, and a 1RW-RAM 430 and a selector 435 that are shared by the queues 465. Further, each queue 465 includes an output queue 410, a selector 420 and an input queue 440.

The output queue 410, selector 420, 1RW-RAM 430 and input queue 440 have functions similar to those of the corresponding components of the queue 365 depicted in FIG. 4.

The packet management unit 460 (queues 465) controls the selectors 420 (SEL A1 to SEL A4) in response to an availability of the output queues 410 (vc[0-3]-Out-Q). For example, where an output queue 410 has a small number of waiting packets (has some free space), the packet management unit 460 controls the corresponding selector 420 to use only the output queue 410, and stores inputted packet information (represented as "info_in" in FIG. 5) into the output queue 410. It is to be noted that, in the case of the configuration depicted in FIG. 5, since also an input path from the packet decoder 230 is shared by the VCs, it is preferable for the packet information to include identification information of a VC such as a VC number.

On the other hand, where an output queue 410 is full of packet information (has no free space), the packet management unit 460 stores inputted packet information into the input queue 440 (vc[0-3]-In-Q) of the corresponding VC. Then, the packet management unit 460 controls the selector 435 (SEL B) to select the writable input queue 440, and writes the top piece of the packet information stored in the selected input queue 440 into the 1RW-RAM 430. Further, the packet management unit 460 waits until the output queue 410 becomes available, and controls the corresponding selector 420 to read out packet information from the 1RW-RAM 430 and then stores the read out information into the output queue 410.

It is to be noted that an output (represented as "vc[0-3]_info_out" in FIG. 5) from the output queue 410 is used as packet information selected and extracted by the selector 180 or 280.

In this manner, the configuration in which the 1RW-RAM 430 is shared by the VCs in the same input port can be implemented comparatively easily.

It is to be noted that, since the input ports of the transmission buffer 200 operate independently of each other, it is difficult to use the same 1RW-RAM 430 among the input ports. Therefore, in the transmission buffer 200, a same 1RW-RAM 430 can be used among the plurality of VCs for each input port as depicted in FIG. 5. Since the queue 465 is an individual resource for each VC, while the total number of queues 465 equal to the number of input ports * the number of VCs come to be provided in the transmission packet management unit 260. However, if the configuration depicted in FIG. 5 is applied, then the amount of 1RW-RAMs 430 and peripheral circuits can be decreased.

Incidentally, where the shortest packet length supported by the crossbar 2 is one cycle, the configuration exemplified in FIG. 5 wherein the 1RW-RAM 430 is shared is sometimes difficult to follow read/write competition. In this case, such countermeasures as to increase the size of the input queues 440 are taken in order to solve the problem of the read/write competition.

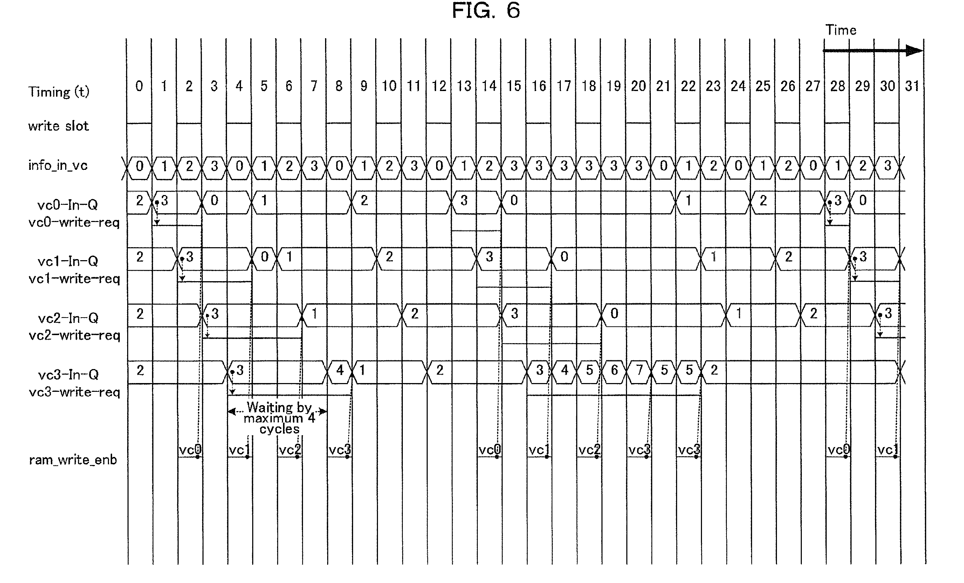

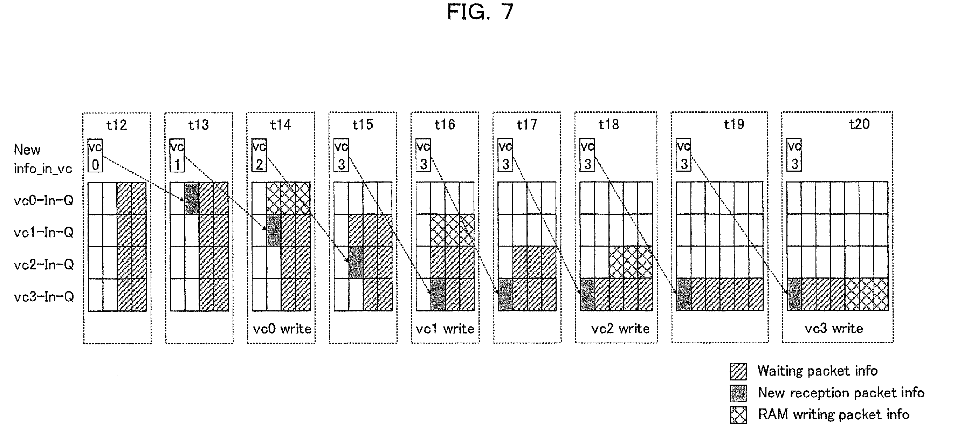

FIG. 6 is a timing chart depicting an example where read/write competition occurs in the packet management unit 460 depicted in FIG. 5, and FIG. 7 is a view depicting a state of the input queues 440 between timings t12 and t20 in the timing chart depicted in FIG. 6.

It is to be noted that it is assumed as a premise that read/write of the 1RW-RAM 430 are performed in a unit of three packets and a read cycle and a write cycle are changed over alternately after every one cycle.

Further, in FIG. 6, reference character "write slot" represents a cycle within which the 1RW-RAM 430 can perform write operation. Further, "info_in_vc" represents a VC number of a packet received by the packet management unit 460 in the cycle, and "vc[0-3]-In-Q" represents a number of waiting packets in the input queue 440 of each VC. Further, "vc[0-3]-write-req" represents a write request to the 1RW-RAM 430 of each VC, and "ram_write_enb" represents a VC number having been written into the 1RW-RAM 430 in the cycle.

As depicted in FIG. 6, three pieces of packet information are accumulated into the input queue 440 of the VC 0 at timing t1, the VC 0 is placed into a writable state. However, since the VC 0 is in a "write slot" waiting state, the write operation is made wait by one cycle. At timing t2, the VC 1 is placed into a writable state. However, since write competition with the VC 0 occurs, write operation of the VC 0 is performed first. Accordingly, the VC 1 is made wait by two cycles.

At timing t3, the VC 2 is placed into a writable state. However, since write competition with the VC 1 occurs, the VC 2 is made wait by three cycles. At timing t4, the VC 3 is placed into a writable state. However, since write competition with the VC 1 and the VC 2 occurs, the VC 3 is made wait by four cycles.

As described above, while the VC 3 is made wait by four cycles in the maximum at timings t1 to t4, at timings t9 to t12 after waiting by four cycles, the number of packets of all VCs becomes smaller than 3 and the read/write competition disappears.

On the other hand, also at timings t13 to t16, the VC 3 is in a write waiting state similarly as at timings t1 to t4. However, different from the cases at timings t9 to t12, the packet management unit 460 successively receives packet information of a VC same as the VC (VC 3) during write waiting at timings t16 to t19. At this time, as depicted in FIG. 7, seven stages of regions (buffers) in the maximum are used by the VC 3 (input queue 440) (timing t20).

Preferably, the VC 3 is configured such that all pieces of packet information can be stored also in such cases as those at timings t16 to t19. In this case, the number of stages used for the input queue 440 is calculated in the following manner:
· In the case where there is no write competition between VCs: the number of VCs * four stages (three stages for accumulation + one stage for "write slot" waiting); or
· In the case where there is write competition between VCs: the number of VCs * (4 + number of VCs - 1) stages. In this manner, it is desired for the input queue 440 to have a number of stages which increases in proportion to the square of the number of all VCs.

While the example depicted in FIGS. 6 and 7 is the worst case of read/write competition where the 1RW-RAM 430 is shared by four VCs, it is recognized that, at least in the configuration wherein the 1RW-RAM is shared by a plurality of VCs, the number of stages used for the input queues increases in comparison with that of the configuration wherein the 1RW-RAM is not shared. Therefore, it seems a possible idea to set the number of stages of the input queues to a number of stages which increases in proportion to the square of the number of all VCs. However, since the area efficiency decreases and the power consumption increases, the advantage where the 1RW-RAM is shared by a plurality of VCs is lost.

Therefore, in a crossbar 20 (reception buffer 500 and transmission buffer 700) as an example of the embodiment, a transmission packet management unit 760 that shares a 1RW-RAM is configured from reduced resources as hereinafter described in detail even if the shortest packet length is one cycle.

### [1-2] Example of the Configuration of the Crossbar

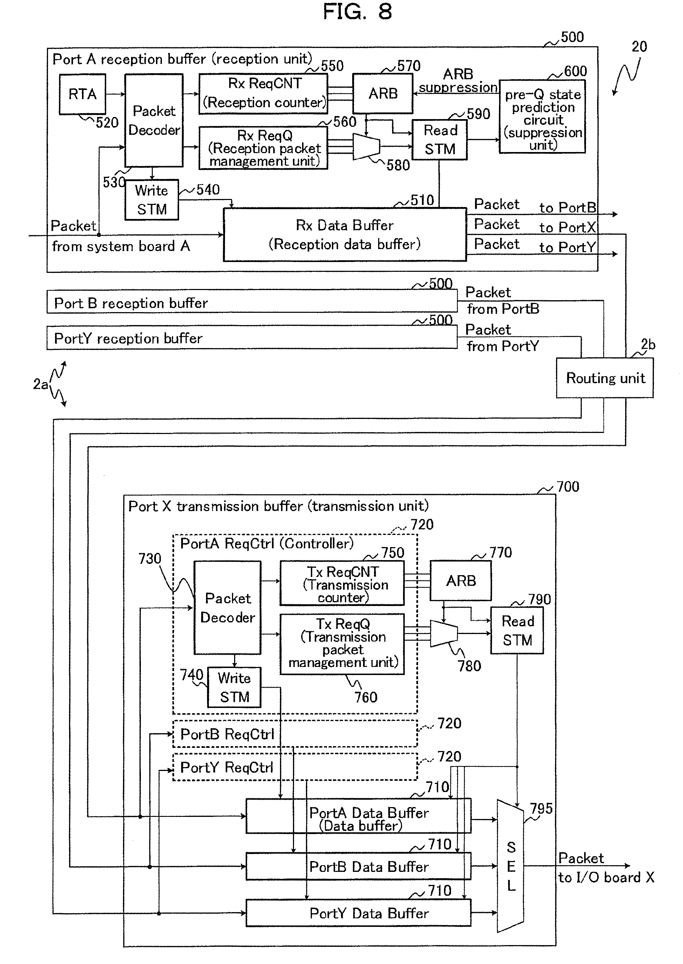

FIG. 8 is a view depicting an example of a configuration of the crossbar 20 as an example of the embodiment.

Request queue control by the crossbar 20 according to the embodiment is described below with reference to FIG. 8.

The crossbar 20 is applied to the informationprocessing system 1 depicted in FIG. 1 similarly to the crossbar 2 and is a data transfer apparatus that outputs inputted data through one of a plurality of VCs (transfer paths) set between a transmission source and a transmission destination of data.

The crossbar 20 according to the embodiment includes the routing unit 2b depicted in FIG. 1, and further includes a plurality of reception buffers 500 and a transmission buffer 700 (port 2a), which are different from the plurality of reception buffers 100 and the plurality of transmission buffers 200 (port 2a) depicted in FIGS. 2 and 3, respectively.

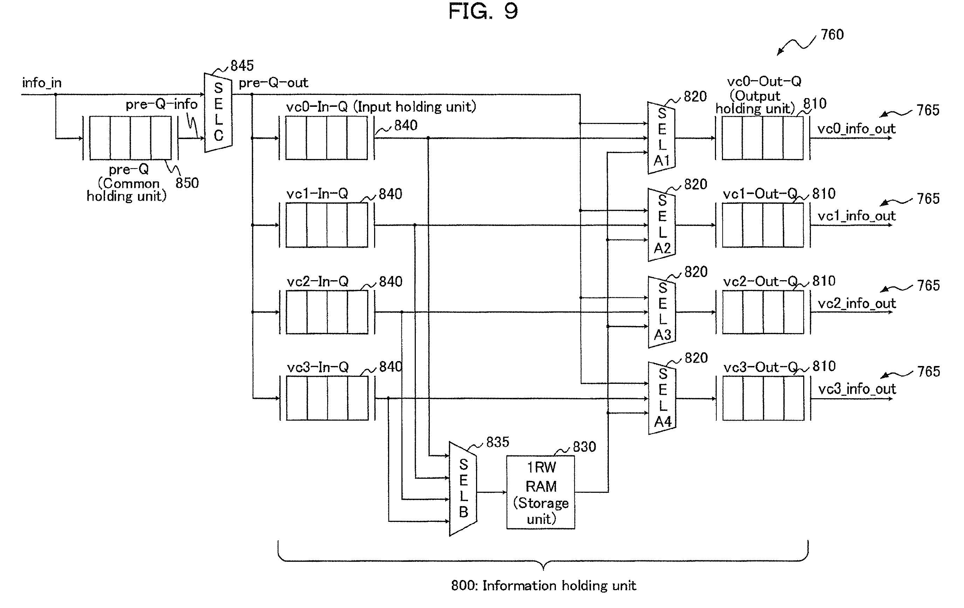

The crossbar 20 includes, in the transmission packet management unit 760 of the transmission buffer 700, a pre-queue 850 (refer to FIG. 9) commonly used by VCs. The crossbar 20 further includes, in each of the reception buffers 500, a pre-queue state prediction circuit 600 that predicts a use state of the pre-queue 850. By applying such a configuration as just described, the crossbar 20 can share a 1RW-RAM 830 (refer to FIG. 9) by the plurality of VCs by addition of minimal queue resources.

Details of the configuration of the transmission buffer 700 and the reception buffers 500 are described in the following.

### [1-2-1] Configuration of the Transmission Buffer

First, an example of the configuration of the transmission buffer 700 is described with reference to FIGS. 8 to 10.

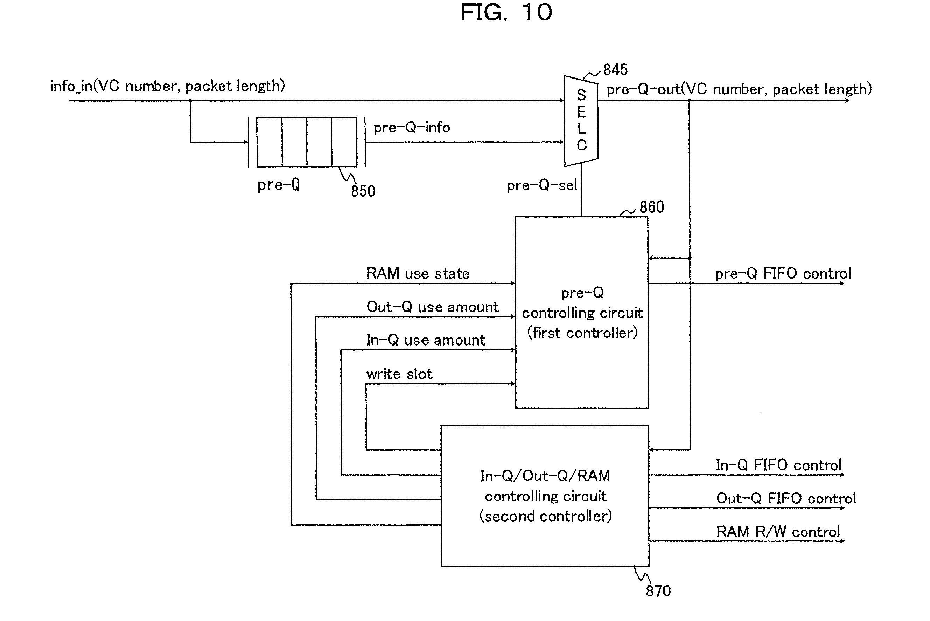

FIG. 9 is a view depicting an example of a configuration of the transmission packet management unit 760 depicted in FIG. 8, and FIG. 10 is a view depicting an example of a configuration of peripheral circuits of the pre-queue 850 depicted in FIG. 9.

Similarly to the transmission buffer 200, the transmission buffer (transmission unit) 700 stores a packet (data) transferred thereto from a reception buffer 500 therein and transmits the packet to a transmission destination. The transmission buffer 700 includes a data buffer 710 and a controller 720 for each of input ports connected thereto. In the example of FIG. 8, the data buffer 710 and the controller 720 are provided corresponding to each of the input ports A, B and Y.

Further, as depicted in FIG. 8, the transmission buffer 700 includes an arbiter 770, a selector 780, a read STM 790 and another selector 795, which are commonly used by a plurality of sets of the data buffer 710 and the controller 720 (by the input ports).

The controller 720 is provided for each input port, and each of the controllers 720 includes a packet decoder 730, a write STM 740, a transmission counter 750 and a transmission packet management unit 760. It is to be noted that, for the simplified illustration, depiction of the inside of the controllers 720 corresponding to the ports B and Y is omitted in FIG. 8.

It is to be noted that the transmission buffer 700 has a configuration basically similar to that of the transmission buffer 200 depicted in FIG. 3 except the configuration of the transmission packet management unit 760, and therefore, overlapping description of the similar configuration is omitted.

As depicted in FIG. 9, the transmission packet management unit 760 includes a plurality of (for example, four) queues 765, and a 1RW-RAM 830, a selector 835, another selector 845 and a pre-queue 850, which are shared by the queues 765. Further, each of the queues 765 includes an output queue 810, a selector 820, and an input queue 840.

The output queues 810, selectors 820, 1RW-RAM 830, selector 835 and input queues 840 have functions similar to those of the components of the queues 465 depicted in FIG. 5.

The output queues (output holding units) 810 and the input queues (input holding units) 840 are provided corresponding to a plurality of VCs similarly to the output queues 410 and the input queues 440, and hold packet information inputted to the transmission packet management unit 760 for the individual VCs. Similarly to the 1RW-RAM 430, the 1RW-RAM (storage unit) 830 is commonly used by the plurality of VCs, and writing into and reading out from the 1RW-RAM (storage unit) 830 are performed alternately. As the 1RW-RAM830, a nonvolatile memory such as, for example, an SRAM is available.

In this manner, the output queues 810, selectors 820, 1RW-RAM 830, selector 835 and input queues 840 are components of an example of an information holding unit 800 that holds packet information (data information) relating to a packet transferred from the reception buffers 500 for the individual VCs.

The pre-queue (pre-Q, common holding unit) 850 is a queue for saving that is used commonly by the plurality of VCs for each input port.

As the output queues 810, input queues 840 and pre-queue 850, a circuit capable of implementing high-speed read/write operation such as, for example, a resister is available.

The selector (SEL C) 845 selects one of packet information (represented as "info_in" in FIG. 9) inputted from the packet decoder 730 and the top packet information (represented as "pre-Q-info" in FIG. 9) stored in the pre-queue 850 and outputs the selected packet information to the information holding unit 800. For example, where the use amount of the pre-queue 850 > 0, the selector 845 selects the packet information stored at the top of the pre-queue 850. It is to be noted that the packet information includes identification information of a VC such as a VC number, information of the packet length and so forth.

Now, peripheral circuits of the pre-queue 850 are described with reference to FIG. 10.

As depicted in FIG. 10, the transmission packet management unit 760 includes, in addition to the components described hereinabove, a pre-queue controlling circuit 860 and an input/output queue/RAM controlling circuit 870.

The pre-queue controlling circuit (first controller) 860 performs control to input packet information to be inputted to the information holding unit 800 to the information holding unit 800 after the packet information passes through the pre-queue 850. For example, the pre-queue controlling circuit 860 performs control to input packet information, which is to be inputted to an input queue 840, to the input queue 840 after the packet information passes through the pre-queue 850 if the input queue 840 holds an information amount (packet information) that reaches a given amount (four example, four packets) on the basis of an input situation of packet information for the individual VCs.

In particular, to the pre-queue controlling circuit 860, packet information (represented as "pre-Q-out" in FIG. 10) outputted from the selector 845 is inputted. Further, to the pre-queue controlling circuit 860, a use state of the 1RW-RAM 830, a use amount of the output queues 810 and the input queues 840 and a state of "write slot" of the 1RW-RAM 830 are inputted from the input/output queue/RAM controlling circuit 870. Then, the pre-queue controlling circuit 860 performs FIFO control of the pre-queue 850 and control of the selector 845 as hereinafter described on the basis of the inputted information.

The input/output queue/RAM controlling circuit (second controller) 870 performs control, on the basis of the information amount of the individual VCs held by the plurality of output queues 810, to first pass packet information inputted to the information holding unit 800 through an input queue 840 and the 1RW-RAM 830 and then input the packet information to a corresponding one of the output queues 810.

For example, the input/output queue/RAM controlling circuit 870 controls, with regard to any output queue 810 that has a small number of waiting packets (has a free space), a corresponding selector 820 so as to use only the output queue 810 and store inputted packet information (represented as "info_in" in FIG. 9) into the output queue 810. At this time, the control of the selector 845 is performed by the pre-queue controlling circuit 860. It is to be noted that, in the case of the configuration depicted in FIG. 9, since also a path for an input from the packet decoder 730 is shared by VCs, the packet information preferably includes identification of a VC such as a VC number.

On the other hand, with regard to any output queue 810 from which packet information overflows (which does not have a free space), the input/output queue/RAM controlling circuit 870 cooperates with the pre-queue controlling circuit 860 to store the inputted packet information into the input queue 840 of the corresponding VC or the pre-queue 850. With regard to the packet information stored in the input queue 840, the input/output queue/RAM controlling circuit 870 controls the selectors 835 to select an input queue 840 into which packet information can be written and write the top packet information stored in the selected input queue 840 into the 1RW-RAM 830. Further, the input/output queue/RAM controlling circuit 870 waits that an output queue 810 becomes available and controls the corresponding selector 820 to read out packet information from the 1RW-RAM 830 and store the packet information into the output queue 810.

Here, to the input/output queue/RAM controlling circuit 870, packet information (represented as "pre-Q-out" in FIG. 10) outputted from the selector 845 is inputted. Further, the input/output queue/RAM controlling circuit 870 performs read/write control of the 1RW-RAM 830 and FIFO control of the output queues 810 and the input queues 840 as hereinafter described and acquires and outputs a use state, a use amount and a state of "write slot" of the 1RW-RAM 830, output queues 810 and input queues 840 to the pre-queue controlling circuit 860.

In the following, a control mode of the pre-queue controlling circuit 860 and the input/output queue/RAM controlling circuit 870 is described.

Packet information received newly is registered into the pre-queue 850 or the input queue 840 of the pertaining VC in accordance with the following rules when the output queue 810 of the pertaining VC has no free space, when the 1RW-RAM 830 has packet information waiting for readout or when the use amount of the pre-queue 850 is equal to or greater than 1.
(i) When the use amount of the pre-queue 850 ≥ 1: the packet information is registered into the pre-queue 850 in order to assure the order of the FIFOs.
(ii) When the use amount of the pre-queue 850 = 0:
   (a) When the 1RW-RAM 830 is in a write cycle: the packet information is registered into the input queue 840 of the pertaining VC.
   (b) When the 1RW-RAM 830 is in a read cycle:
      (b-1) When the use amount of the input queues 840 of all VCs < 3 (when there is no packet information as a write target into the 1RW-RAM 830) : since no write competition occurs, the packet information is registered into the input queue 840 of the pertaining VC.
      (b-2) When the use amount of the input queue 840 of a VC different from that of the arriving packet ≥ 3: the arriving packet is registered into the pre-queue 850 because, if the arriving packet is registered into the input queue 840 of the VC of the arriving packet, then if the use amount of the pertaining input queue 840 becomes 3, then write completion occurs.
      (b-3) When the use amount of the input queue 840 of a VC same as that of the arriving packet ≥ 3: a plurality of (for example, three) pieces of packet information are collectively written into the 1RW-RAM 830 in a next write cycle, and therefore, the arriving packet is registered into the input queue 840 of the pertaining VC.
   Further, the piece of packet information stored at the top of the pre-queue 850 is registered from the pre-queue 850 into the input queue 840 of the pertaining VC if one of the following conditions is satisfied.
(iii) That the 1RW-RAM 830 is in a write cycle.
(iv) That the 1RW-RAM 830 is in a read cycle and a condition (a) or (b) given below is satisfied.
   (a) That the use amount of the input queues 840 of all VCs < 3 (that there is no packet information of a write target into the 1RW-RAM 830)
   (b) That the use amount of the input queue 840 of a VC same as that of the top packet of the pre-queue 850 ≥ 3

It is to be noted that the reason why the condition (a) in the condition (iv) is applied is that no write completion occurs, and the reason why the condition (b) in the condition (iv) is applied is that a plurality of (for example, three) pieces of packet information are collectively written into the 1RW-RAM 830 in a next write cycle.

In the conditions described above, storage/readout of packet information into/from the pre-queue 850 are performed by the pre-queue controlling circuit 860, and storage/readout of packet information into/from the input queue 840 are performed by the input/output queue/RAM controlling circuit 870.

As described above, the pre-queue controlling circuit 860 and the input/output queue/RAM controlling circuit 870 reduce write competition into the 1RW-RAM 830 by controlling so that the number of VCs that are placed into a write waiting state into the 1RW-RAM 830 (use amount of the input queue 840 ≥ 3) in a read cycle becomes equal to or smaller than 1.

In this manner, the transmission packet management unit 760 saves arriving information of a succeeding packet into the pre-queue 850 when there is the possibility that some input queue 840 may overflow because of write competition into the 1RW-RAM 830 between VCs. Consequently, queue resources (stage number) which come to be added by sharing the 1RW-RAM 830 among the VCs can be suppressed to a minimum.

Further, the transmission packet management unit 760 includes the pre-queue 850 and the selector 845 at the preceding stage to the input queues 840 and further includes the pre-queue controlling circuit 860. Accordingly, the information holding unit 800 in the transmission packet management unit 460 depicted in FIG. 5 (flow (logics) from an input queue 440 to an output queue 410) need not be modified, and the transmission buffer 700 according to the embodiment can be implemented readily.

### [1-2-2] Configuration of the Reception Buffer

Now, an example of a configuration of each reception buffer 500 is described with reference to FIGS. 8, 11 and 12.

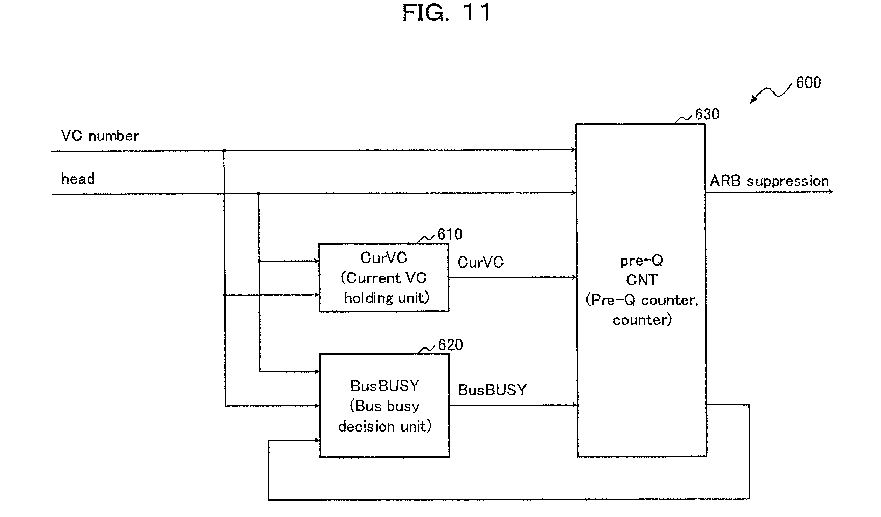

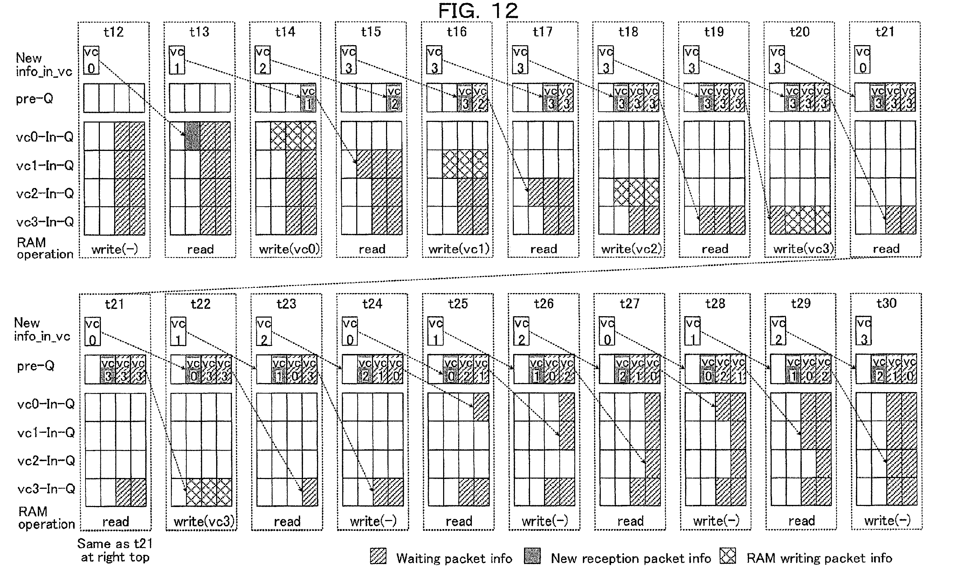

FIG. 11 is a view depicting an example of a configuration of the pre-queue state prediction circuit 600 depicted in FIG. 8, and FIG. 12 is a view illustrating a state of the input queues 840 and the pre-queue 850 between timings t12 and t30 where the pre-queue 850 having four stages is applied in the timing chart depicted in FIG. 6.

The reception buffer (reception unit) 500 receives and stores a packet (data) from a transmission source similarly to the transmission buffer 100. As depicted in FIG. 8, each reception buffer 500 includes a reception data buffer 510, an RTA 520, a packet decoder 530, a write STM 540, a reception counter 550, and a reception packet management unit 560. The reception buffer 500 further includes an arbiter 570, a selector 580, a read STM 590, and a pre-queue state prediction circuit 600. It is to be noted that, in FIG. 8, illustration of the inside of the receptionbuffers 500 corresponding to the ports B and Y is omitted for simplified illustration.

It is to be noted that the reception buffer 500 has a configuration basically similar to that of the transmission buffer 100 depicted in FIG. 2 except the configurationof the arbiter 570, read STM 590 andpre-queue state prediction circuit 600, and therefore, overlapping description of the common components is omitted.

The arbiter 570 is configured basically similarly to the arbiter 170 but is different in that it stops arbitration when a suppression instruction from the pre-queue state prediction circuit 600 is received. In particular, while the suppression instruction is received from the pre-queue state prediction circuit 600, the arbiter 570 suppresses transmission of packet information and a selection instruction of a reception packet to the selector 580 and the read STM 590.

The read STM 590 is configured basically similarly to the read STM 190. However, the read STM 590 is different in that, when a reading out instruction is received from the arbiter 570, the read STM 590 outputs information representing the top of a reception packet read out from the reception data buffer 510 and information of the pertaining VC to the pre-queue state prediction circuit 600. The reception packet and the information of the VC (for example, a VC number) transmitted from the read STM 590 are used, as information representative of a reception packet and a VC, which are to be transmitted from the reception buffer 500 to a destination port from now, for prediction of the use amount of the pre-queue 850 by the pre-queue state prediction circuit 600.

The pre-queue state prediction circuit (suppression unit) 600 suppresses new packet (data) transfer to the transmission buffer 700 in response to the amount of information held by the pre-queue 850 of the transmission buffer 700. For example, the pre-queue state prediction circuit 600 predicts the information amount to be held by the pre-queue 850 on the basis of information of individual VCs of a packet to be transferred and another packet transferred immediately before, and suppresses new packet transfer to the transmission buffer 700 in response to a result of the prediction.

In particular, the pre-queue state prediction circuit 600 manages the maximum amount by which the pre-queue 850 may possibly be used, and suppresses, when there is the possibility that the pre-queue 850 may overflow, the arbitration by the arbiter 570 to prevent an overflow of the pre-queue 850. The reception buffer 500 can predict the state of the pre-queue 850 in the transmission buffer 700 without acquiring the state directly and can predict the use amount of the pre-queue 850 with certainty without being influenced by the propagation time of information from the reception buffer 500 to the transmission buffer 700.

As depicted by the timing chart of FIG. 6, write competition at the 1RW-RAM 830 occurs in a case wherein one-cycle packets of different VCs successively appear. Therefore, the pre-queue state prediction circuit 600 tracks the VC number of successive one-cycle packets to detect a timing at which the pre-queue 850 may possibly be used and predict the use amount of the pre-queue 850.

It is to be noted that the reception buffer 500 in the embodiment includes a single pre-queue state prediction circuit 600. The pre-queue 850 whose state is predicted by the pre-queue state prediction circuit 600 is provided in one of a plurality of transmission buffer 700 which is a transfer destination of a packet. In other words, the pre-queue state prediction circuit 600 does not predict the state of the pre-queue 850 in the reception buffers 700 but predicts the state assuming that the pre-queue 850 is common to all reception buffers 700.

As depicted in FIG. 11, the pre-queue state prediction circuit 600 includes a current VC holding unit 610, a bus busy decision unit 620, and a pre-queue counter 630.

The pre-queue state prediction circuit 600 operates using the top timing (head) of a packet received from the read STM 590 as a trigger.

The current VC holding unit (CurVC) 610 records the VC number of a packet outputted last from the reception buffer 500. The current VC holding unit 610 sets a VC number at a timing of the head of a packet but holds, at a timing different from that of the head, the set VC number. In other words, in the current VC holding unit 610, a VC number of a packet outputted immediately before from the reception buffer 500 (immediately prior VC number) is held.

The bus busy decision unit (BusBUSY) 620 is used to indicate a state wherein there is the possibility that the pre-queue 850 may be used. The bus busy decision unit 620 sets, for example, "1" at the timing of a head and resets, when the head ends in a state in which the count value of the pre-queue counter 630 is "0", the set value, for example, to "0". It is to be noted that, as a case wherein the head ends, a case wherein a packet is not outputted from the reception buffer 500 in the cycle, another case wherein a packet having a packet length greater than that of two cycles is being outputted from the reception buffer 500 and so forth are available.

The pre-queue counter 630 is a counter that counts the use prediction amount of the pre-queue 850.

In particular, when the VC number of an output packet from the read STM 590 (VC number at present) and the immediately prior VC number held by the current VC holding unit 610 are different from each other in a state in which "1" is set in the bus busy decision unit 620, the pre-queue counter 630 increments the count value, for example, by 1 at a timing of the head of the pertaining output packet.

On the other hand, when the head of a packet from the read STM 590 ends (when no packet is transferred in the immediately preceding transfer cycle), the pre-queue counter 630 decrements the count value, for example, by 1.

Further, when the VC number of the output packet from the read STM 590 and the immediately preceding VC number held by the current VC holding unit 610 are equal to each other, the pre-queue counter 630 holds the count value at the timing of the head of the pertaining output packet. This is because, if pieces of packet information of the same VC are inputted successively to the pre-queue 850, then a preceding piece of packet information goes out from the pre-queue 850 while a succeeding piece of packet information enters the pre-queue 850, and the variation of the use amount of the pre-queue 850 is ±0.

Further, when the count value of the pre-queue counter 630 reaches a maximum value (for example, four) of the pre-queue 850, the pre-queue counter 630 transmits a suppression instruction to the arbiter 570 to prevent overwriting of the pre-queue 850. It is to be noted that, if outputting of a packet from the reception buffer 500 stops as a result of the suppression of the arbitration operation by the arbiter 570, then the head ends. In this case, since the count value of the pre-queue counter 630 is decremented by one in the next cycle, the suppression instruction from the pre-queue counter 630 stops.

It is to be noted that the current VC holding unit 610 and the bus busy decision unit 620 may be configured from a circuit such as , for example, a counter while the pre-queue counter 630 may be configured, for example, from a counter circuit.

In this manner, the pre-queue state prediction circuit 600 predicts the use amount of the pre-queue 850 in the corresponding transmission buffer 700 by the pre-queue counter 630 and suppresses, when the pre-queue 850 is likely to overflow, the arbitration by the arbiter 570 thereby to suppress transfer of a reception packet to the transmission buffer 700. Accordingly, the use amount of the pre-queue 850 can be predicted with certainty tracking the state of a packet transferred from the reception buffer 500.

Here, a state of the input queue 840 between timings t12 and t30 where four pre-queue 850 are applied and the pre-queue state prediction circuit 600 is not provided in the timing chart depicted in FIG. 6 is described with reference to FIG. 12.

At timing t20 of FIG. 20, from among the seven pieces of packet information accumulated in the input queue 440 of the VC 3 at timing t20 of FIG. 7, three pieces of packet information are absorbed by the pre-queue 850. Also at timings t21 to t30 of FIG. 12, a situation wherein a number of pieces of packet information exceeding the prescribed number of four are stored into the input queue 840 of each VC does not occur at all.

However, since the pre-queue 850 is a FIFO queue commonly used by all VCs, if the worst case wherein write competition occurs successively is taken into consideration, then a state in which the state at timing t12 of FIG. 12 (in which the pre-queue 850 is not used) is replaced into the state at timing t30 (in which the pre-queue 850 is used at three stages thereof) may possibly occur. In this manner, a case wherein the stage number used for the pre-queue 850 increases infinitely is likely to occur.

In contrast, where the pre-queue state prediction circuit 600 is provided as in the case of the reception buffer 500 in the embodiment, it is possible to stop inputting to the pre-queue 850 and prevent an overflow of the pre-queue 850 under such a special condition as in the worst case as described above. Accordingly, the number of stages of the pre-queue 850 at the transmission buffer 700 side can be limited to a small number (for example, to four stages).

It is to be noted that, although it is described above that the pre-queue state prediction circuit 600 predicts the state of the pre-queue 850 on the basis of the VC of a packet transmitted from the reception buffer 500, the pre-queue state prediction circuit 600 is not limited to this. For example, the pre-queue state prediction circuit 600 may receive a signal representative of a use state of the pre-queue 850 by immediately coupling the pre-queue state prediction circuit 600 to the transmission buffer 700 or by like measures. In this case, the pre-queue state prediction circuit 600 may include a function for suppressing the arbiter 570 in response to the use state of the pre-queue 850 received from the transmission buffer 700 and therefore can be configured more simply.

Further, the reception packet management unit 560 of the reception buffer 500 may be configured similarly to the transmission packet management unit 460 depicted in FIG. 5. For example, the CPUs 3a of the system boards 3 can detect a state of resources of the VCs such as a congestion state of the buffers in the crossbar 2, and it is possible to select a VC to be used for transfer of a packet on the basis of a result of the detection. Accordingly, the CPUs 3a can select a different VC avoiding a VC whose input queue 440 congests before a packet is transmitted, and consequently, the probability that the input queues 440 may overflow is reduced.

### [1-3] Examples of Operation

Now, examples of operation of the information processing system 1 as an example of the embodiment configured in such a manner as described above are described.

### [1-3-1] Example of Operation of the Crossbar

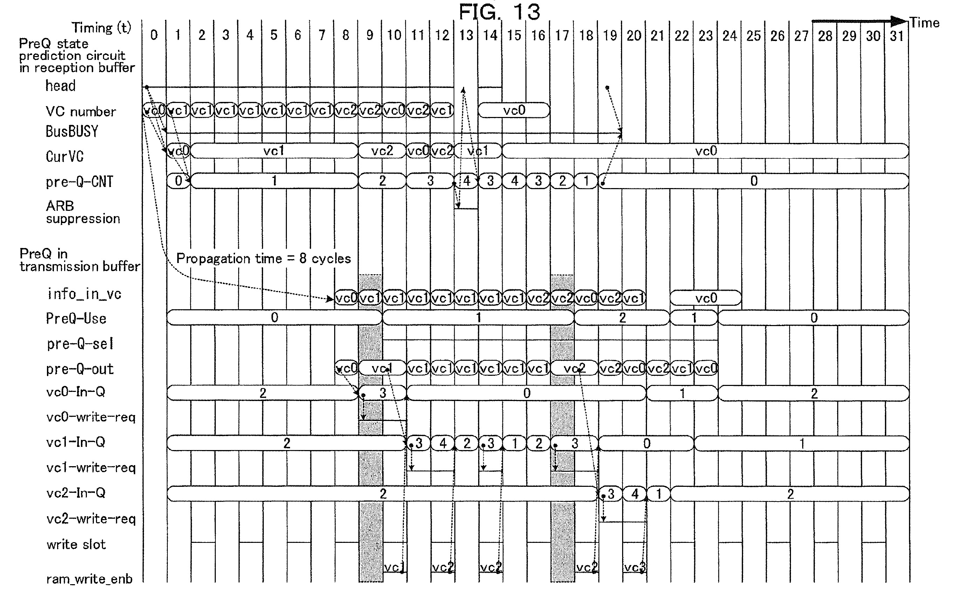

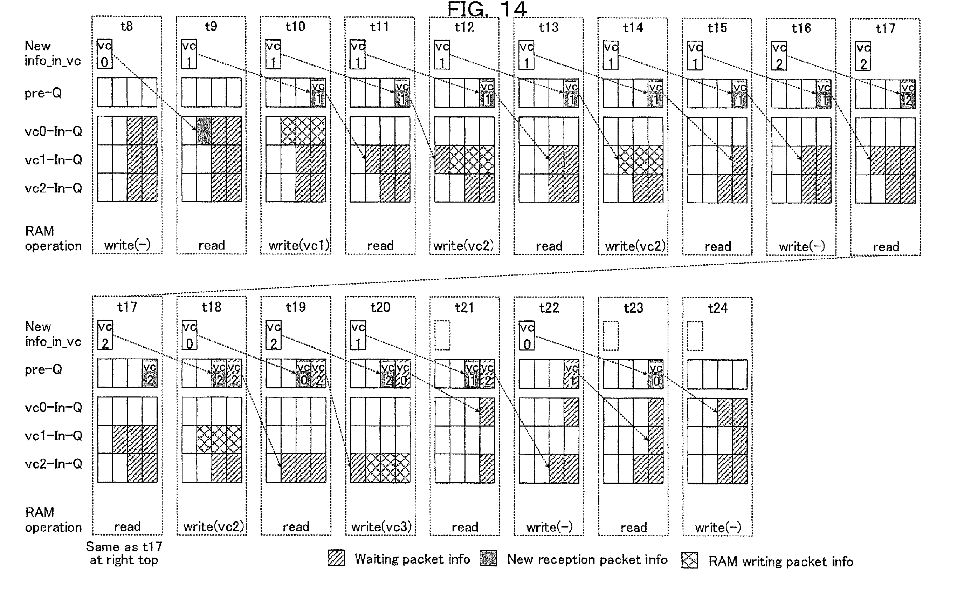

First, an example of operation of the crossbar 20 is described with reference to FIGS. 13 and 14.

FIG. 13 is a timing chart illustrating an example of operation of the crossbar 20 depicted in FIG. 8, and FIG. 14 is a view illustrating a state of the input queue 840 and the pre-queue 850 between timings t8 and t24 in the timing chart depicted in FIG. 13.

As a prerequisite, it is assumed that the number of stages of the input queue 840 of each VC is four and the input queue 840 writes, after it receives three pieces of packet information, the packet information into the 1RW-RAM 830. Further, it is assumed that, in FIG. 13, two pieces of packet information are accumulated in all VCs in advance. Furthermore, since a reception buffer 500 and a reception buffer 700 are coupled to each other through the routing unit 2b, the buffers operate with a time lag therebetween. Here, it is assumed that the time lag (propagation time period) is eight cycles and a packet outputted at timing t0 from the reception buffer 500 arrives at the pre-queue 850 in the transmission buffer 700 at timing t8. Further, the packets at timings t8 to t20 are one-cycle packets, and the packet at timing t22 is a three-cycle packet.

It is to be noted that, in FIG. 13, "info_in_vc" represents the VC number and the packet length of a packet arriving at the transmission buffer 700 from the reception buffer 500. Meanwhile, "Pre-Q-CNT" represents the count value of the pre-queue counter 630, and "PreQ-Use" represents an actual use amount of the pre-queue 850.

If the following conditions (I) and (II) are satisfied as at timing t9 or t17, then only write operation occurs, and therefore, the use amount of the pre-queue 850 increases.
(I) That, in a read cycle, some VC is placed into a write waiting state into the 1RW-RAM 830 (use amount of the input queue 840 ≥ 3).
(II) That the VC of an output (pre-Q-out) from the pre-queue 850 changes over at a timing at which the head of a new packet is being received.
   It is to be noted that, to the condition (I) above, the VC 0 corresponds at timing t9, and the VC 1 corresponds at timing t17. Meanwhile, as the condition (II), the output VC changes over from the VC 0 to the VC 1 at timing t9, and changes over from the VC 1 to the VC 2 at timing t17.
   Further, when the condition (III) given below is satisfied as at timings t10 to t16 and t19, write competition into the 1RW-RAM 830 does not occur with the pre-queue 850. Further, since reading and writing from and into the pre-queue 850 occur simultaneously, the use amount does not increase.
(III) That packets of the same VC appear successively at the output (pre-Q-out) from the pre-queue 850.
   Further, when the following condition (IV) or (V) is satisfied as at timings t18, t20 and t22, write competition into the 1RW-RAM 830 does not occur with the pre-queue 850, and the use amount of the pre-queue 850 does not increase.
(IV) That, even if changeover of the VC occurs at the output (pre-Q-out) from the pre-queue 850, the pre-queue 850 is in a write cycle.
(V) That there is no VC that is to be placed into a write waiting state into the 1RW-RAM 830 (use amount of the input queue 840 ≥ 3).
   Meanwhile, when the following condition (VI) or (VII) is satisfied as at timing t21 or t23, since only reading operation from the pre-queue 850 is performed, the use amount of the pre-queue 850 decreases.
(VI) That a gap appears between packets (that the head of a packet ends and packet information is not inputted).
(VII) That the packet length is equal to or greater than 2 cycles (the head of a packet does not appear successively and packet information is not inputted).

As described above, since the pre-queue state prediction circuit 600 operates assuming the worst write congestion state, the number of "Pre-Q-CNT" is greater than the number of "PreQ-Use" that is an actual use amount of the pre-queue 850. In the example depicted in FIG. 13, while the maximum value of "PreQ-Use" is "2", the maximum value of "Pre-Q-CNT" is "4". Where the stage number of the pre-queue 850 is four, since operation of the arbiter 570 is suppressed at timing t13, reversal of the relationship in magnitude between "PreQ-Use" and "Pre-Q-CNT" does not occur at all.

In this manner, with the pre-queue state prediction circuit 600, the use amount of the pre-queue 850 can be predicted with a value having some margin, and an overflow of the pre-queue 850 can be prevented with a higher degree of certainty. Accordingly, even where the number of stages of the pre-queue 850 is limited, for example, to four, it is possible to suppress overwriting of the pre-queue 850.

### [1-3-2] Example of Operation of the Pre-queue State Prediction Circuit

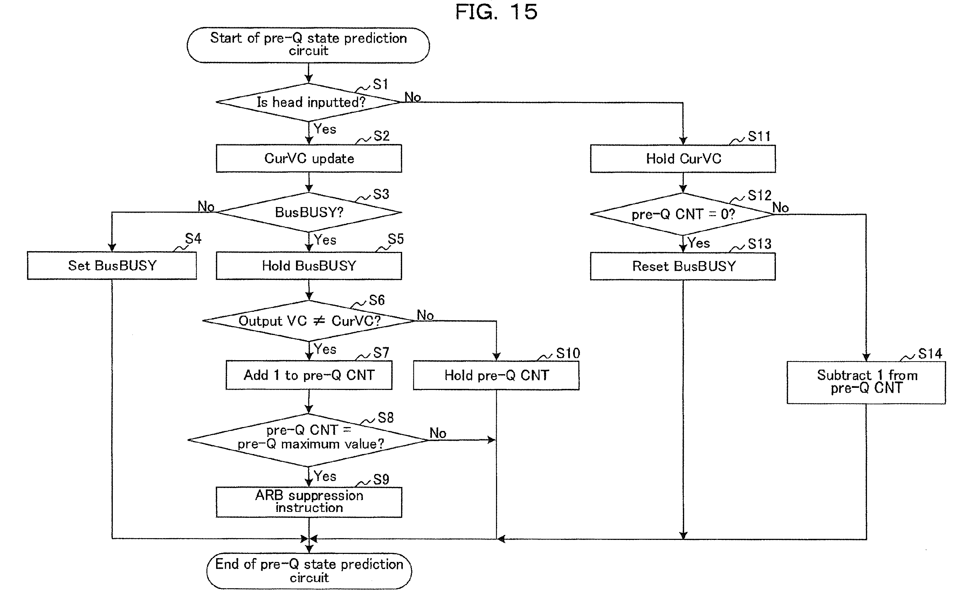

Now, an example of operation of the pre-queue state prediction circuit 600 of the reception buffer 500 is described with reference to FIG. 15.

FIG. 15 is a flow chart illustrating an example of operation of the pre-queue state prediction circuit 600 depicted in FIG. 8.

It is to be noted that the procedure illustrated in FIG. 15 is performed after every cycle or cycles (transfer cycle or cycles; for example, one cycle) in which the reception buffer 500 can transfer a packet).

First, as illustrated in FIG. 15, it is decided by the pre-queue counter 630 of the pre-queue state prediction circuit 600, whether or not there is an input of a head from the read STM 590 (step S1). If there is an input of a head (Yes route at step S1), then the VC number (CurVC) is updated by the current VC holding unit 610 (step S2). Further, it is decided by the bus busy decision unit 620 whether or not the state at present is a bus-busy state, for example, whether or not "1" is placed in the register (step S3). If the state at present is not a bus-busy state ("0" is placed in the register) (No route at step S3), then the register is set to "1" by the bus busy decision unit 620 (step S4), and the processing is ended therewith.

On the other hand, if the state at present is a bus-busy state ("1" is placed in the register) (Yes route at step S3), then since a bus-busy state is established already, the value of the register is held by the bus busy decision unit 620 (step S5), and the processing advances to step S6. At step S6, the output VC number from the read STM 590 and the immediately preceding VC number (CurVC) stored in the current VC holding unit 610 are compared with each other by the pre-queue counter 630 to decide whether or not the VC numbers are different from each other.

If the two VC numbers are different from each other (Yes route at step S6), then the count value (pre-Q CNT) is incremented by one by the pre-queue counter 630 (step S7). Further, it is decided by the pre-queue counter 630 whether or not the count value reaches a predetermined threshold value for the storage capacity of the pre-queue 850 (for example, a maximum number (maximum value) of pieces of packet information which can be held by the pre-queue 850) (step S8). If the count value does not reach the maximum value of the pre-queue 850 (No route at step S8), then the processing is ended. On the other hand, if the count value reaches the maximum value of the pre-queue 850 (Yes route at step S8), then a suppression instruction is issued from the pre-queue counter 630 to the arbiter 570 (step S9), and the processing is ended therewith.

On the other hand, if the output VC number and the immediately preceding VC number (CurVC) are equal to each other at step S6 (No route at step S6), then the count value is held by the pre-queue counter 630 (step S10), and the processing is ended therewith.

On the other hand, if there is no input of a head at step S1 (No route at step S1), then the VC number (CurVC) is held by the current VC holding unit 610 (step S11). Further, it is decided by the bus busy decision unit 620 whether or not the count value is "0" (step S12). If the count value is "0" (Yes route at step S12), then the register is reset, for example, to "0" by the bus busy decision unit 620 (step S13), and the processing is ended therewith.

On the other hand, if the count value is not "0" at step S12 (No route at step S12), then the count value is decremented by one by the pre-queue counter 630 (step S14). Then, the processing is ended therewith.

### (1-3-3) Example of Operation of the Transmission Packet Management Unit

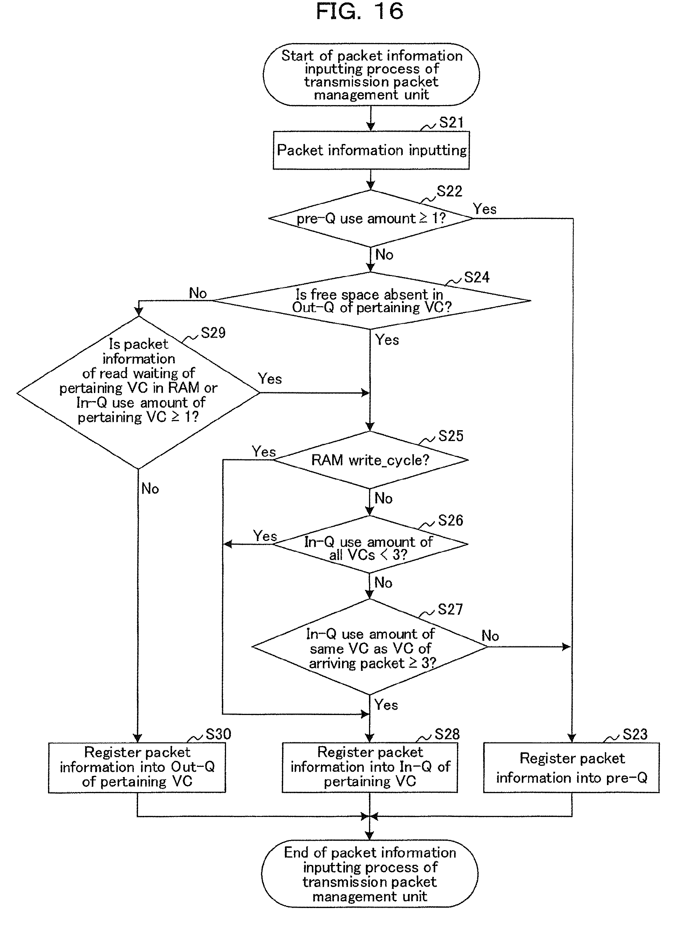

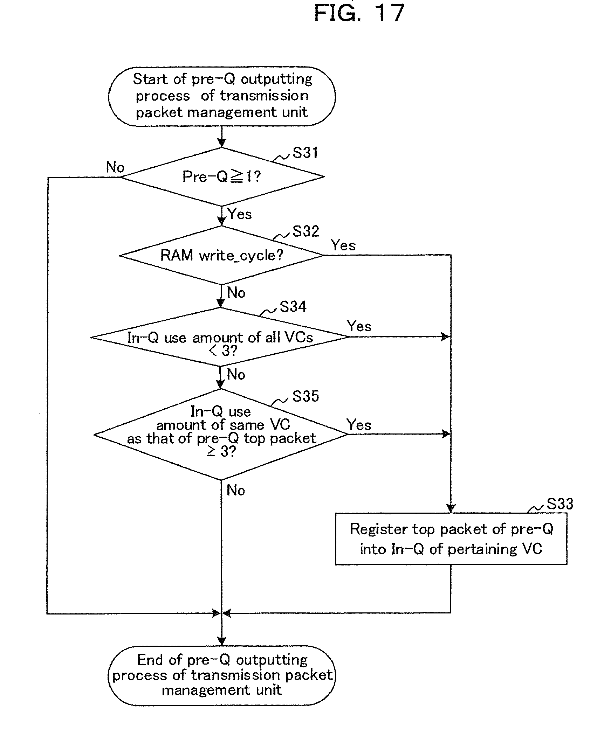

Now, an example of operation of the transmission packet management unit 760 of the transmission buffer 700 is described with reference to FIGS. 16 and 17.

FIGS. 16 and 17 are flow charts illustrating an example of operation in a packet information inputting process by the transmission packet management unit 760 depicted in FIG. 8 and an outputting process from the pre-queue 850.

It is to be noted that the procedure illustrated in FIG. 16 is performed every time packet information is inputted to the transmission packet management unit 760, and the procedure illustrated in FIG. 17 is performed at every cycle or cycles (for example, every one cycle) of read/write operations of the 1RW-RAM 830.

First, the packet information inputting process illustrated in FIG. 16 is described.

As illustrated in FIG. 16, if packet information is inputted to the transmission packet management unit 760 (step S21), then it is decided by the pre-queue controlling circuit 860 whether or not the use amount of the pre-queue 850 is equal to or greater than 1 (step S22). If the use amount of the pre-queue 850 is equal to or greater than 1 (Yes route at step S22), then the inputted packet information is registered into the pre-queue 850 by the pre-queue controlling circuit 860 (step S23), and the processing is ended therewith.

On the other hand, if the use amount of the pre-queue 850 is 0 at step S22 (No route at step S22), then it is decided whether or not a free space is absent in the output queue 810 of the pertaining VC (step S24). If a free space is absent in the output queue 810 of the pertaining VC (Yes route at step S24), then it is decided on the basis of an input from the input/output queue/RAM controlling circuit 870 by the pre-queue controlling circuit 860 whether or not the 1RW-RAM 830 is in a write cycle (step S25).

If the 1RW-RAM 830 is not in a write cycle (is in a read cycle) (No route at step S25), then it is decided on the basis of the input from the input/output queue/RAM controlling circuit 870 by the pre-queue controlling circuit 860 whether or not the use amount of the input queues 840 of all VCs is smaller than 3 (step S26). Then, if the use amount of the input queues 840 of all VCs is not smaller than 3 (No route at step S26), then it is decided by the pre-queue controlling circuit 860 whether or not the use amount of the input queue 840 of the VC same as the VC of the arriving packet is equal to or greater than 3 (step S27).

If the use amount of the input queue 840 of the VC same as the VC of the arriving packet is equal to or greater than three (Yes route at step S27), then the inputted packet information is registered into the input queue 840 of the pertaining VC by the input/output queue/RAM controlling circuit 870 (step S28). Then, the processing is ended. On the other hand, if the use amount of the input queue 840 of the VC same as the VC of the arriving packet is not equal to or greater than 3 (No route at step S27), namely, if the use amount of the input queue 840 of a VC different from the VC of the arriving packet is equal to or greater than 3, then the processing advances to step S23.

It is to be noted that, if the 1RW-RAM 830 is in a write cycle at step S25 (Yes route at step S25) or the use amount of the input queue 840 of all VCs is smaller than 3 at step S26 (Yes route at S26), then the processing advances to step S28.

Further, if a free space is present in the output queues 810 of the pertaining VC at step S24 (No route at step S24), then the processing advances to step S29. At step S29, it is decided on the basis of the input from the input/output queue/RAM controlling circuit 870 by the pre-queue controlling circuit 860 whether or not one of the following conditions is satisfied.
- That the 1RW-RAM 830 has read-waiting packet information of the pertaining VC.
- That the use amount of the input queue 840 of the pertaining VC is equal to or greater than 1.

If one of the conditions is satisfied (Yes route at step S29), then the processing advances to step S25.

On the other hand, if none of the conditions is satisfied (No route at step S29), then the inputtedpacket information is registered into the output queue 810 of the pertaining VC by the input/output queue/RAM controlling circuit 870 (step S30). Then, the processing is ended.

Now, an outputting process from the pre-queue 850 depicted in FIG. 17 is described.

As illustrated in FIG. 17, it is decided by the pre-queue controlling circuit 860 whether or not the use amount of the pre-queue 850 is equal to or greater than 1 (step S31) . If the use amount of the pre-queue 850 is not equal to or higher than 1 (No route at step S31), then the processing is ended.

On the other hand, if the use amount of the pre-queue 850 is equal to or greater than 1 (Yes route at step S31), then it is decided by the pre-queue controlling circuit 860 whether or not the 1RW-RAM 830 is in a write cycle (step S32). If the 1RW-RAM 830 is in a write cycle (Yes route at step S32), then the top packet of the pre-queue 850 is read out by the pre-queue controlling circuit 860 and registered into the input queue 840 of the pertaining VC by the pre-queue controlling circuit 860 (step S33). Then, the processing is ended.

On the other hand, if the 1RW-RAM 830 is not in a write cycle (is in a read cycle) at step S32 (No route at step S32), then it is decided by the pre-queue controlling circuit 860 whether or not the use amount of the input queues 840 of all VCs is smaller than 3 (step S34). If the use amount of the input queues 840 of all VCs is not smaller than 3 (No route at step S34), then it is decided by the pre-queue controlling circuit 860 whether or not the use amount of the input queue 840 of the VC same as that of the top packet of the pre-queue 850 is equal to or greater than 3 (step S35). If the use amount of the input queue 840 of the VC same as that of the top packet of the pre-queue 850 is not equal to or greater than 3 (No route at step S35), then the processing is ended.

It is to be noted that, if the use amount of the input queue 840 of all VCs is smaller than 3 at step S34 (Yes route at step S34) or if the use amount of the input queue 840 of the VC same as the VC of the top packet of the pre-queue 850 is equal to or greater than 3 (Yes route at step S35), then the processing advances to step S33.

As described above, with the information processing system 1 (crossbar 20) according to the embodiment, a pre-queue 850 of a minimum capacity is provided in the transmission packet management unit 760 in each transmission buffer, and a pre-queue state prediction circuit 600 corresponding to the pre-queue 850 is provided in each reception buffer 500. Consequently, even where the smallest packet length is one cycle, the 1RW-RAM 830 can be shared by the VCs for the individual input ports in the transmission packet management unit 760, and increase of the disposition area of circuitry and of the power consumption by increase of the 1RW-RAM 830 can be suppressed.

### [2] Modification

Although an example in which one pre-queue state prediction circuit 600 is provided in the reception buffer 500 is presented in the embodiment described above, the embodiment is not limited to this, but the pre-queue state prediction circuit 600 may be provided for each destination port.

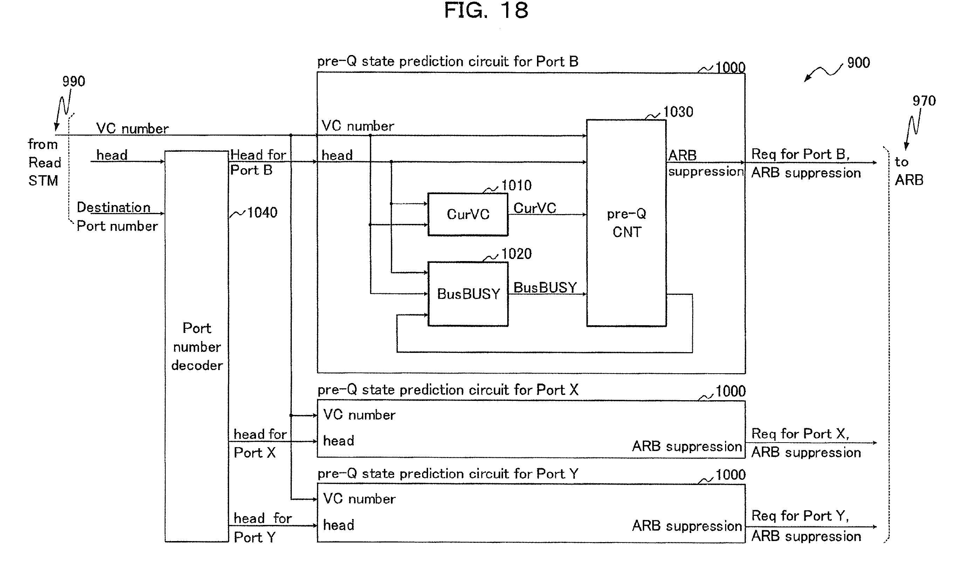

FIG. 18 is a view depicting a configuration of a reception buffer 900 according to a modification to the embodiment.

As depicted in FIG. 18, different from the reception buffer 500, the reception buffer 900 according to the modification to the embodiment includes a pre-queue state prediction circuit 1000 for each destination port (transmission buffer 700). It is to be noted that, since components of the pre-queue state prediction circuit 1000 (current VC retention unit 1010, bus busy decision unit 1020 and pre-queue counter 1030) basically have functions similar to those of the components depicted in FIG. 11, overlapping description of them is omitted herein. Further, for simplified illustration, depiction of the inside of the pre-queue state prediction circuit 1000 of the ports X and Y is omitted.

Further, the reception buffer 900 includes an arbiter 970 and a read STM 990 different from those of the reception buffer 500, and further includes a port number decoder 1040.

The read STM 990 outputs not only a packet (head) and a VC number but also a destination port number.

The port number decoder 1040 receives the head and the destination port number inputted from the read STM 990 and transmits the head to the pre-queue state prediction circuit 1000 corresponding to the pertaining destination port number.

The pre-queue state prediction circuit 1000 performs, when the head is received from the port number decoder 1040, a process similar to that of the pre-queue state prediction circuit 600 on the basis of the VC number from the read STM 990.

If a suppression instruction is issued from the pre-queue state prediction circuit 1000, then the arbiter 970 suppresses new packet transfer relating only to the destination port pertaining to the suppression instruction.

In particular, if the pre-queue state prediction circuit 600 according to the embodiment predicts that the use amount reaches a maximum value assuming that the pre-queue 850 is shared by all transmission buffers 700, then the pre-queue state prediction circuit 600 suppresses transfer of all kinds of packets including packets to the other transmission buffers 700. In contrast, the reception buffer 900 according to the modification to the embodiment can suppress new packet transfer relating only to a transmission buffer 700 in which it is predicted that the use amount of the pre-queue 850 reaches the maximum value, but can continuously perform the packet transfer relating to the other transmission buffer or buffers 700.

Accordingly, with the reception buffer 900 according to the modification to the embodiment, effects similar to those of the embodiment can be achieved and the throughput of the crossbar 20 can be enhanced.

### [3] Others

Although the preferred embodiment of the present invention has been described in detail, the present invention is not limited to the embodiment specifically described above, and variations and modifications can be made without departing from the scope of the present invention.

For example, the crossbar 20 described hereinabove includes four ports and the reception buffer 500 (900) and the transmission buffer 700 individually include four VCs. However, the number of ports and VCs is not limited to this, and an arbitrary number of ports and VCs can be applied. Similarly, in the embodiment described above, the number of stages of the output queues 810, input queues 840 and pre-queue 850 is four. However, also the number of stages of the queues is not limited to this, but an arbitrary number of stages can be applied to each queue.

Further, the functions of the reception buffer 500 (900) and the transmission buffer 700 may be integrated or dispersed in an arbitrary combination.

Furthermore, the order of the processes at steps S22, S24 to S27 and S29 in FIG. 16 is not limited to that described hereinabove but may be suitably changed. Similarly, the order of the processes at step S31, S32, S34 and S35 of FIG. 17 is not limited to that described hereinabove but may be suitably changed.

## Claims

1. An information processing apparatus, comprising:
a first apparatus (3, 4) that transmits data;
a data transfer apparatus (20) that outputs the data inputted from the first apparatus (3, 4) through one of a plurality of transfer paths set between the first apparatus (3, 4) and a transfer destination of the data; and
a second apparatus (3, 4) that serves as the transfer destination and receives the data from the data transfer apparatus (20); wherein
the data transfer apparatus (20) includes:
a reception unit (500) that receives and stores the data from the first apparatus (3, 4) therein; and
a transmission unit (700) that stores the data transferred from the reception unit (500) and transmits the data to the second apparatus (3, 4);
the transmission unit (700) includes:
an information holding unit (800) that holds data information relating to the data transferred from the reception unit (500) therein for each transfer path;
a common holding unit (850) commonly used by the plurality of transfer paths; and
a first controller (860) that performs, based on an inputting situation of the data information for each transfer path, control for inputting the data information to be inputted to the information holding unit (800) to the information holding unit (800) after passing the common holding unit (850); and
the reception unit (500) includes a suppression unit (600) that suppresses new data transfer to the transmission unit (700) in response to an information amount of the information held in the common holding unit (850).

2. The information processing apparatus according to claim 1, wherein the suppression unit (600) predicts an information amount of the information to be held into the common holding unit (850) based on information of the transfer path of the data to be newly transferred from the reception unit (500) and information of the transfer path of data transferred immediately before and suppresses new data transfer to the transmission unit (700) is response to a result of the prediction.

3. The information processing apparatus according to claim 2, wherein the suppression unit (600) includes a counter (630) that performs counting when the transfer path of data to be newly transferred from the reception unit (500) is different from the transfer path of data transferred in an immediately preceding transfer cycle from the reception unit (500); and
the suppression unit (600) suppresses new data transfer to the transmission unit (700) when a result of the counting reaches a predetermined threshold value for a storage capacity of the common holding unit (850).

4. The information processing apparatus according to claim 3, wherein the counter (630) decreases the result of the counting when no data is transferred in the immediately preceding transfer cycle to the data to be newly transferred from the reception unit (500).

5. The information processing apparatus according to any one of claims 1 to 4, wherein the information holding unit (800) includes:
a plurality of input holding units (840) provided corresponding to the plurality of transfer paths;
a holding unit (830) that is used commonly by the plurality of transfer paths and performs writing therein and readout therefrom alternately; and
a plurality of output holding units (810) provided corresponding to the plurality of transfer paths and holding the data information inputted to the information holding unit (800) therein for each transfer path; and
the transmission unit (700) further includes a second controller (870) that performs, based on the information amount of the information for each transfer path held in the plurality of output holding units (810), control for inputting the data information inputted to the information holding unit (800) to the corresponding output holding unit (810) after the data information passes the input holding unit (840) and the holding unit (830).

6. The information processing apparatus according to claim 5, wherein the first controller (860) performs control of inputting, to the input holding unit (840) in which the information amount of the held information reaches a predetermined amount based on an inputting situation of the data information for each transfer path, the data information to be inputted to the input holding unit (840) after the data information passes the common holding unit (850).

7. The information processing apparatus according to claim 5 or 6, wherein the plurality of transfer paths are a plurality of virtual channels individually including the output holding unit (810) and the input holding unit (840).

8. The information processing apparatus according to any one of claims 1 to 7, wherein the data transfer apparatus (20) includes the transmission unit (700) for each apparatus (3, 4) that becomes a transmission destination of the data transmitted from the first apparatus (3, 4); and
the reception unit (500) includes the suppression unit (600) corresponding to each of the plurality of transmission units (700).

9. A data transfer apparatus (20) that outputs inputted data through one of a plurality of transfer paths set between a transmission source (3, 4) and a transmission destination (3, 4) of the data, comprising:
a reception unit (500) that receives and stores the data from the transmission source (3, 4) therein; and
a transmission unit (700) that stores the data transferred from the reception unit (500) and transmits the data to the transmission destination (3, 4) ; wherein
the transmission unit (700) includes:
an information holding unit (800) that holds data information relating to the data transferred from the reception unit (500) therein for each transfer path;
a common holding unit (850) used commonly by the plurality of transfer paths; and
a first controller (860) that performs, based on an inputting situation of the data information for each transfer path, control for inputting the data information to be inputted to the information holding unit (800) to the information holding unit (800) after the data information passes the common holding unit (850); and
the reception unit (500) includes a suppression unit (600) that suppresses new data transfer to the transmission unit (700) in response to an information amount of the information held in the common holding unit (850).

10. The data transfer apparatus according to claim 9, wherein the suppression unit (600) predicts an information amount of the information to be held into the common holding unit (850) based on information of the transfer path of the data to be newly transferred from the reception unit (500) and information of the transfer path of data transferred immediately before and suppresses new data transfer to the transmission unit (700) in response to a result of the prediction.

11. The data transfer apparatus according to claim 10, wherein the suppression unit (600) includes a counter (630) that performs counting when the transfer path of data to be newly transferred from the reception unit (500) is different from the transfer path of data transferred in an immediately preceding transfer cycle from the reception unit (500); and
the suppression unit (600) suppresses new data transfer to the transmission unit (700) when a result of the counting reaches a predetermined threshold value for a storage capacity of the common holding unit (850).

12. The data transfer apparatus according to claim 11, wherein the counter (630) decreases the result of the counting when no data is transferred in the immediately preceding transfer cycle to the data to be newly transferred from the reception unit (500).

13. The data transfer apparatus according to any one of claims 9 to 12, wherein the information holding unit (800) includes:
a plurality of input holding units (840) provided corresponding to the plurality of transfer paths;
a holding unit (830) that is used commonly by the plurality of transfer paths and performs writing therein and readout therefrom alternately; and
a plurality of output holding units (810) provided corresponding to the plurality of transfer paths and holding the data information inputted to the information holding unit (800) therein for each transfer path; and
the transmission unit (700) further includes a second controller (870) that performs, based on the information amount of the information for each transfer path held in the plurality of output holding units (810), control for inputting the data information inputted to the information holding unit (800) to the corresponding output holding unit (810) after the data information passes the input holding unit (840) and the holding unit (830).

14. The data transfer apparatus according to claim 13, wherein the first controller (860) performs control of inputting, to the input holding unit (840) in which the information amount of the held information reaches a predetermined amount based on an inputting situation of the data information for each transfer path, the data information to be inputted to the input holding unit (840) after the data information passes the common holding unit (850).

15. A data transfer method for an information processing apparatus (1), which includes a first apparatus (3, 4) that transmits data, a data transfer apparatus (20) that outputs the data inputted from the first apparatus (3, 4) through one of a plurality of transfer paths set between the first apparatus (3, 4) and a transfer destination of the data, and a second apparatus (3, 4) that serves as the transfer destination and receives the data from the data transfer apparatus (20), the data transfer apparatus (20) including a reception unit (500) that receives and stores the data from the first apparatus (3, 4) therein and a transmission unit (700) that stores the data transferred from the reception unit (500) and transmits the data to the second apparatus (3, 4), the transfer method comprising:
holding, by the transmission unit (700) of the data transfer apparatus (20), data information relating to the data transferred from the reception unit (500) into an information holding unit (800) for each transfer path;
performing, by the transmission unit (700), based on an inputting situation of the data information for each transfer path, control for inputting the data information to be inputted to the information holding unit (800) to the information holding unit (800) after the data information passes a common holding unit (850) used commonly by the plurality of transfer paths; and
suppressing, by the reception unit (500), new data transfer to the transmission unit (700) in response to an information amount of the information held in the common holding unit (850).
